# EUROPEAN PATENT APPLICATION

(11) **EP 2 082 664 A2**
(43) Date of publication of application: **29.07.2009**
(21) Application number: 09151566.8
(22) Date of filing: 28.01.2009
(51) Int. Cl.: A45C 13/38, B62B 1/12, A45C 13/26, A45C 13/36

(54) **Wheeled luggage and base-and-frame assembly therefor**

(30) Priority: 28.01.2008 JP 2008016419; 09.10.2008 JP 2008262968
(71) Applicant: Swany Corporation, Higashikagawa-shi, Kagawa (JP)
(72) Inventor: Miyoshi, Etsuo, Higashikagawa-shi, Kagawa (JP)
(74) Representative: Intes, Didier Gérard André

(57) **Abstract**

A base-and-frame assembly (1) for the wheeled luggage includes: a platform (102) having a carriage surface (2) for detachably carrying a separable bag (3) thereon; and an extendable rod (5) connected to the support tube (7) in a self-standing manner and having a grip (4) connected at an upper end, and being stopped by a stopper (15) at an extended position. The platform (102) is provided with a latitudinal reinforcement rib (112A) integrally formed below a planar carriage plate (9) with its top face serving as the carriage surface. In a horizontal plane including such surface, the latitudinal reinforcement rib (112A,112B) extends in a lateral direction orthogonal to the grip, protruding on a bottom face of the carriage plate (9). A reinforcement protrusion (108) is integrally formed with the latitudinal reinforcement rib (112A), protruding downwardly at an area below the support tube (7).

## Description

### BACKGROUND OF THE INVENTION

### 1. Field of the Invention

The present invention relates to wheeled luggage and a base-and-frame assembly constituting the luggage, and in particular relates to the luggage having a vertically extendable and retractable handle.

### 2. Description of the Related Art

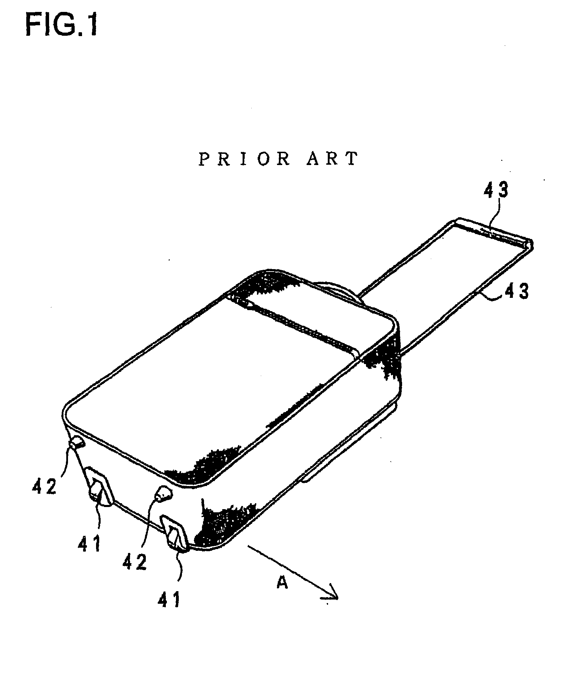

Wheeled luggage provided with an extractable handle has thus far been developed and used on many occasions. Many types of luggage of this structure are available with a size allowed to carry on into an aircraft or with a somewhat larger size. The luggage of such structure is described, for example, in U.S. Patent No. 4995487, Japanese Application Laid-Open Publication No. H04-076686 (1992), Japanese Utility Model Publication No. S57-179824 (1982) and Japanese Utility Model Publication No. S63-131634 (1988). The luggage described in these publications is provided with two pieces of casters 41 on one side of the bottom face as shown in FIG. 1. Stubs or bosses 42 are fixed to the side opposite to the casters 41. When the luggage stands upright, the casters 41 and the stubs or bosses 42 contact the floor. In this state, since the unrotatable stubs or bosses 42 contact the floor, the luggage is kept self-standing without movement. Further, in order to pull the luggage for movement, an extractable handle 43 is provided on the top face. Since the luggage is moved by pulling the luggage in its tilted state, the handle 43 is provided on the same side as the casters 41.

As show In FIG. 1, the luggage of this structure can be moved by tilting the luggage and pulling on the handle 43. When the luggage is tilted, the casters 41 remains in contact with the floor and the stubs or bosses are moved away from the floor. When the handle 43 is pulled in this state, the casters 41 rotate for an easy movement. However, in the case of the luggage movable in this manner, the casters 41 may not sometimes be used in a narrow place like in an aircraft or in a crowded place. This is because, when the luggage is traveled on the casters 41, the lateral width of the luggage becomes large, disabling the luggage to be freely moved along the narrow aisle between seats in the aircraft or in a crowded place. When the casters 41 cannot be used, a user has to lift up the luggage by hands for movement. In movement by hand-lifting the luggage, the luggage can be moved in the direction as indicated by arrow "A" in FIG. 1 so that the lateral width may not become large.

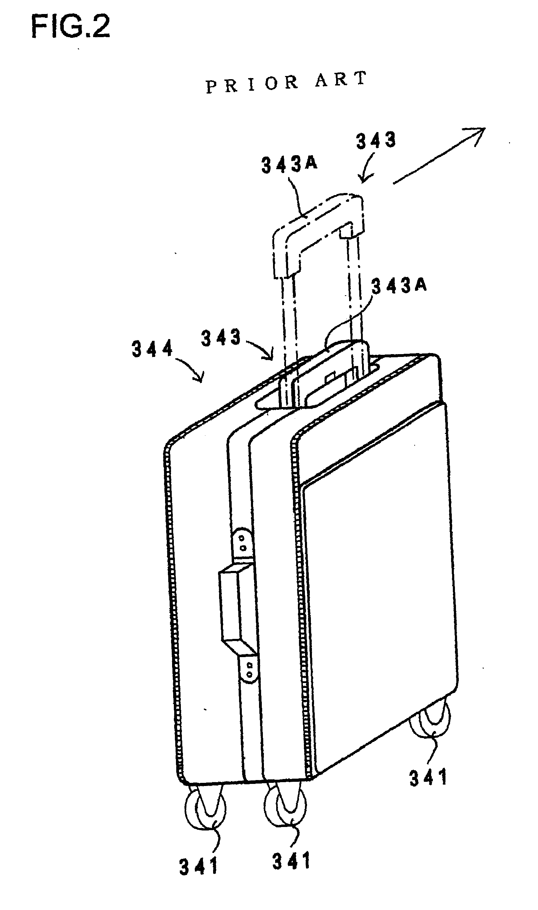

The wheeled luggage is conveniently so structured as to move a heavy load of the luggage in a light and easy manner. This is because, even when the luggage is heavy, the casters facilitate an easy movement of the luggage. In order to overcome the above-described disadvantage, the present inventor has developed luggage of the structure as illustrated in FIG. 2 (Japanese Patent Application Laid-Open Publication No. H10-117829 (1998)). The illustrated luggage has casters 341 mounted to the bottom face of the casing main body 344. The casters 341 are provided on four corners of the bottom face so that the casing main body 344 can be kept self-standing in its vertical posture. A grip 343A in a handle 343 is located on the upper part of the casing main body 344 and in the center of the right-and-left direction. Unlike in the luggage shown in FIG. 1, the luggage of this structure is not meant for being tilted for movement. The luggage in its upright posture is moved in the direction as indicated by an arrow in FIG. 2. When moved in the direction as indicated by the arrow, the luggage can be moved with its lateral width being made narrower. For this reason, this luggage carries the advantage that the luggage can be conveniently moved in an aircraft or in a crowded place. Further, when the four pieces of casters 341 are swivel casters to allow for movement in free directions, the luggage in its upright posture can be moved in free directions. In the case of the luggage in its upright posture, the weight of the luggage does not act on the handle 343. For such reason, even when the luggage is very heavy, movement can be made with ease simply by pushing the luggage.

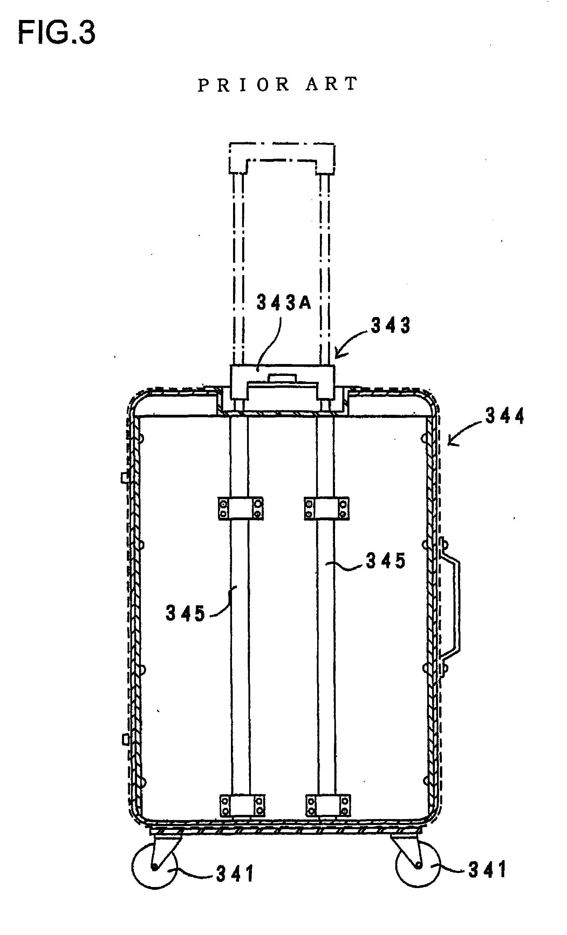

The luggage of this structure can be moved in a light and easy manner by means of the four casters when the grip of the handle is pushed. In the luggage of this structure, however, since the handle is mounted in the center portion, extendable rods 345 of the handle 343 have to be fixed inside the casing main body 344 as shown in the cross-sectional view in FIG. 3. In order for the extendable rods 345 to have the grip 343A disposed in the center portion in the right-and-left direction of the casing main body 344, the extendable rods 345 are fixed in the right-and-left direction, namely in a state of extending through the center portion in the thickness direction of the casing main body 344. In the luggage of this structure, the extendable rods 345 are hampering, which makes it difficult to effectively utilize the interior space of the casing main body 344.

In aiming to solve these drawbacks, the present inventor developed luggage as shown in FIG. 4 (Japanese Patent Application Laid-Open Publication No. H10-137022 (1998)).

This particular luggage is provided with casters 441 respectively in four corners of the bottom face of the casing main body 444, and further the extendable rods 445 are fixed to the side of the casing main body 444. The extendable rods 445 are so structured as to extract the handle 443 upwardly, and are provided with the grip 443A at its top end. The extendable rods 445 are curved such that the grip 443A is positioned in the center portion of the right-and-left direction of the top face of the casing main body 444 when the rods are extracted from the casing main body 444.

The luggage of this structure carries the advantage that, because the extendable rods are fixed on the side, the interior space of the casing main body can be made deeper. However, since the extendable rods are fixedly attached to the casing main body in the luggage of this structure, the casing main body has to be sturdily structured. This is because the extendable rods are made self-standing by means of the casing main body. Unlike in the case of FIG. 1 where the luggage is moved by pulling on the extendable rods, the luggage of this particular structure is required to have a sturdy structure that the luggage does not fall down even when pushed laterally, because the casing main body is moved by being pushed forward while being used like as a walking stick for supporting a user in ambulation. For this reason, in order to make up a structure that the extendable rods can be kept self-standing firmly on the casing main body, the casing main body and the fixture portion for the extendable rods have to be reinforced securely. Thus, the luggage of this structure suffers the disadvantage that the casing main body is intricately structured, resulting in a very high cost of manufacture. The luggage of this structure also suffers the disadvantage that it is difficult to achieve reinforcement for a sturdy structure without reducing the interior space for storage.

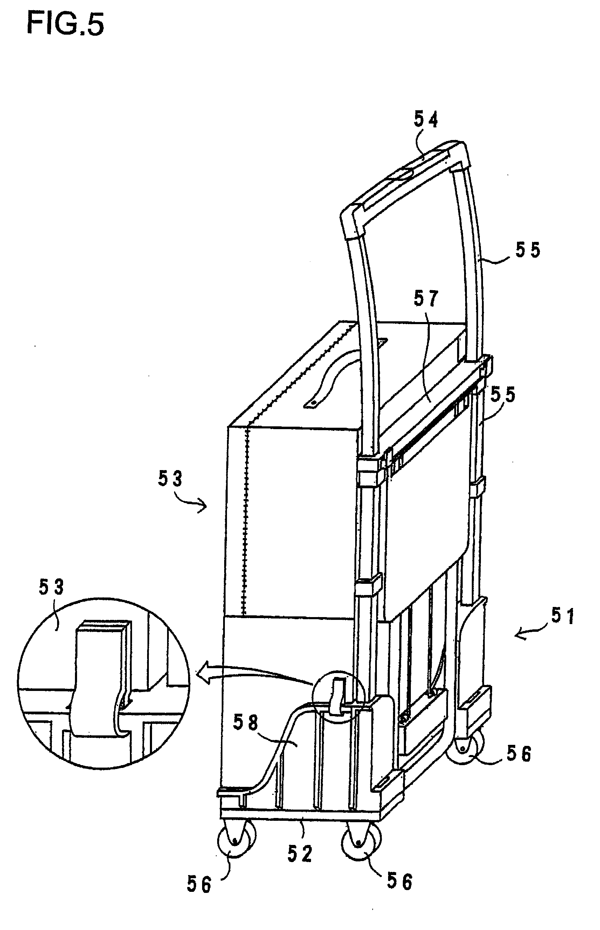

In order to further overcome such drawback, the present inventor developed luggage as shown in FIG. 5. This particular luggage has the casing main body 53 detachably mounted to the base-and-frame assembly 51 provided, in its four corners of the bottom face, with the casters 56 which can travel in free directions. The base-and-frame assembly 51 includes a platform 52 on which a casing main body 53 is mounted, an extendable rod 55 being extractable upwardly and having a grip 54 at the top end, and a stopper (not shown) for holding the extendable rod 55 at its extended position and retracted position. The platform 52 is provided, at its four corners, a caster 56 respectively. The extendable rod 55 is fixed to one side of the platform 52 so as to be extended upwardly into a self-standing state. The casing main body 53 is mounted on the platform 52 and to the side of the extendable rod 55 and connected to the base-and-frame assembly 51.

Like a conventional type, the luggage of this particular structure is unable to allow the casing main body 53 to prevent the extendable rod 55 from tilting off. For such reason, the base-and-frame assembly 51 has to be firmly connected to the platform 52 in a sturdy structure that the extendable rod 55 does not tilt off. To realize such design, the base-and-frame assembly 51 has the extendable rod 55 fixed to the corner of the platform 52, and the extendable rod 55 is reinforced with a reinforcement wall 58. The reinforcement wall 58 is a wall provided along the opposite edges of the platform 52 to connect the extendable rod 55 to the platform 52, for their connection in a manner that the extendable rod 55 may not tilt off. The base-and-frame assembly 51 allows the casing main body 53 to be mounted in a portion surrounded by the extendable rod 55 and the reinforcement wall 58. The platform 52 and the reinforcement wall 58 are produced in an integral formation by using plastic or light metal such as aluminum.

In the luggage of this structure, the extendable rod is supported by the reinforcement wall and connected to the platform so as not to tilt off. However, since the reinforcement wall is respectively provided along the opposite edges of the platform, the casing main body has to be placed between the reinforcement walls at the opposite ends. This limits the width of the casing main body due to the distance between the pair of the reinforcement walls, and thus limiting the size and design, etc. of the casing main body to be carried on the platform.

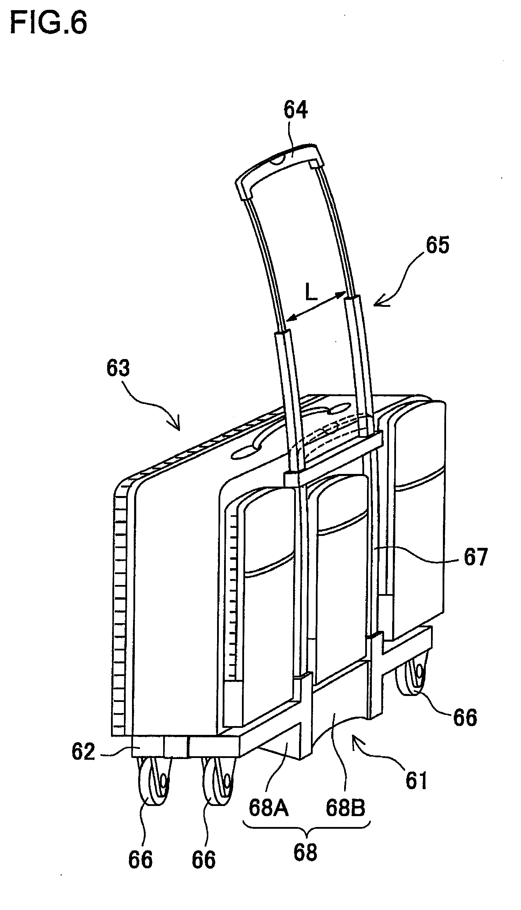

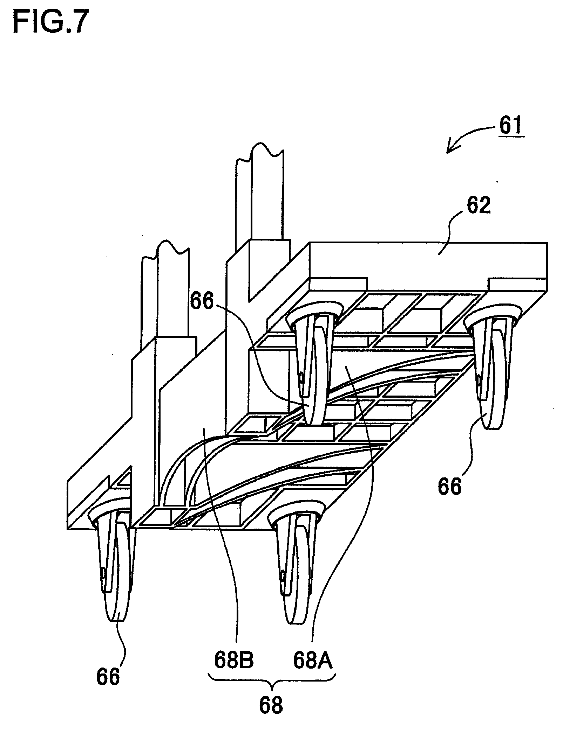

In order to further solve such problem, the present inventor developed luggage as shown in FIG. 6. Like the luggage shown in FIG. 5, this particular luggage includes a base-and-frame assembly 61 having a caster 66, and a casing main body 63. This design differs from the luggage shown in FIG. 5 in terms of the position of forming a reinforcement wall 68, and the reinforcement wall 68 in the luggage shown in FIG. 6 is provided below the platform 62. With reference to FIG. 7 which is a bottom perspective view of the base-and-frame assembly 61, an explanation shall be made of the reinforcement wall 68. The reinforcement wall 68 is disposed between the casters 66 provided at four corners of the bottom face of the platform 62., and is further constituted by a latitudinal reinforcement wall 68A and a longitudinal reinforcement wall 68B which are interconnected. Further, the reinforcement wall 68 protrudes from the bottom face of the platform 62, with its protruding height "d" being smaller than the height "h" of the caster 66.

Thus, provision of the reinforcement wall 68 protruding below the platform 62 ensures a sturdy structure of the base-and-frame assembly 61. Resultantly, since a reinforcement wall can be omitted on the top face of the platform 62, there does not exist any spatial limitation on the top face of the platform 62, and thus a wider option is available for the casing main body 63 to be carried on the platform 62.

In the case of the luggage shown in FIG. 6, however, since the casters 66 are provided on the four corners of the bottom face of the platform 62, the reinforcement wall 68 being provided likewise on the bottom face of the platform 62 has to be installed to avoid the positions of mounting the casters 66. Therefore, the reinforcement wall 68 is to be disposed between the casters 66, but such disposition is also to limit the positions of mounting the support tubes 67 extending upwardly of the platform 62 in connection with the reinforcement walls 68. Even further, such structure also limits the position of the extendable rod 65 being inserted into and connected to the support tube 67 as well as the position of the grip 64 provided on the top end of the extendable rod 65. Thus, when the distance between the casters 66 is relatively small, a spaced-apart distance "L" of the extendable rods 65 becomes even smaller in accordance with the reinforcement wall 68 provided between the casters 66, and thus the length of the grip 64 also becomes smaller.

The grip 64 with its shorter gripping area is hard to hold. In addition, when force is to be applied to a small area of the side face of the luggage, it becomes difficult to control the luggage. As the result, less ease of pushing the luggage leads to limited controllability of the traveling direction of the luggage. There is also a risk that the imbalanced luggage is liable to fall down.

The present invention has been made with an aim to further remedy the above-mentioned disadvantages, and a primary object of the invention is to provide a wheeled luggage and its constituent base-and-frame assembly which are designed to reinforce an extendable rod and ensure ease of control when the luggage is moved.

### SUMMARY OF THE INVENTION

The wheeled luggage has a separable bag 3 and a base-and-frame assembly 1 that allows the separable bag 3 to be carried on. The base-and-frame assembly 1 includes: a platform 102 having, on its top face, a carriage surface 2 to allow the separable bag 3 to be detachably carried on; a swivel caster 6 being fixed to a bottom face opposite to the carriage surface 2 of the platform 102 and allowing the base-and-frame assembly 1 to travel in free directions; a hollow support tube 7 being connected to one side of the carriage surface 2 of the platform 102 in a self-standing manner and protruding substantially vertically in an upward direction; an extendable rod 5 connected to the support tube 7 in a self-standing manner, the rod 5 being freely extendable and having a grip 4 provided on one end of the support tube 7; and a stopper 15 allowing the extendable rod 5 to stop at an extended position.

The base-and-frame assembly 1 is provided with two pieces of the support tubes 7 on one side of the carriage surface 2, has two pieces of extendable rods 5 respectively connected to the two pieces of support tubes 7, and has the grip 4 connected on top ends of the two extendable rods 5. Further, the platform 102 has a planar carriage plate 9 with its top face serving as the carriage surface and has the support tube 7 connected in a manner of extending substantially upwardly from one side of the carriage plate 9. The platform 102 is provided, in a horizontal plane including the carriage surface, with a latitudinal reinforcement rib 112A extending laterally in a direction orthogonal to the grip and protruding on a bottom face of the carriage plate 9, the latitudinal reinforcement rib 112A being integrally formed with the carriage plate 9. Further, the latitudinal reinforcement rib 112A is featured in that an area located below the support tube 7 is protruded downwardly to serve as a reinforcement protrusion 108, with the reinforcement protrusion 108 being integrally formed with the latitudinal reinforcement rib 112A.

The extendable rod 5 of the base-and-frame assembly, in a posture with the grip 4 being lifted, can be so structured as to be curved or slanted toward a center portion from the one side of the carriage surface 2.
The above and further objects of the present invention as well as the features thereof will become more apparent from the following detailed description to be made in conjunction with the accompanying drawings.

### BRIEF DESCRIPTION OF THE DRAWINGS

FIG. 1 is a perspective view showing a conventional type of wheeled luggage;
FIG. 2 is a perspective view of the wheeled luggage previously developed by the present inventor;
FIG. 3 is a vertical cross-sectional view of the wheeled luggage shown in FIG. 2;

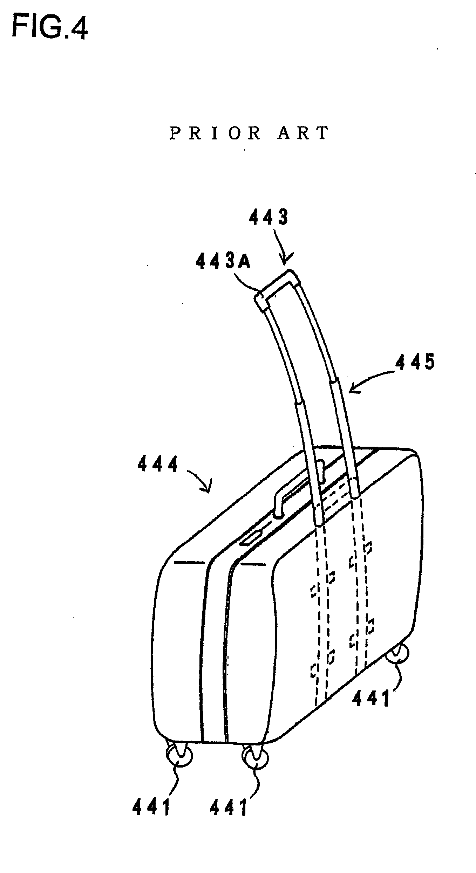

FIG. 4 is a perspective view of another wheeled luggage previously developed by the present inventor;
FIG. 5 is a perspective view of even another wheeled luggage previously developed by the present inventor;
FIG. 6 is a perspective view of yet another wheeled luggage previously developed by the present inventor;
FIG. 7 is a bottom perspective view showing the base-and-frame assembly of the wheeled luggage shown in FIG. 6;
FIG. 8 is an exploded perspective view of the wheeled luggage in accordance with an embodiment of the present invention;
FIG. 9 is a side view of the wheeled luggage in accordance with an embodiment of the present invention;
FIG. 10 is a perspective view of the base-and-frame assembly shown in FIG. 8;
FIG. 11 is a side view of the base-and-frame assembly shown in FIG. 8;
FIG. 12 is a side view of the base-and-frame assembly in another form;
FIG. 13 is a side view of the base-and-frame assembly in yet another form;
FIG. 14A is a top plan view of the base-and-frame assembly;
FIG. 14B is a bottom view of the base-and-frame assembly;
FIG. 15 is a perspective view of the base-and-frame assembly;
FIG. 16 is an exploded perspective view of the wheeled luggage in accordance with the second embodiment (of the present invention);
FIG. 17 is a perspective view of the wheeled luggage in accordance with the second embodiment (of the present invention);
FIG. 18 is a perspective view of the wheeled luggage, shown in another state, in accordance with the second embodiment (of the present invention);
FIG. 19 is a side view of the wheeled luggage in accordance with the third embodiment (of the present invention);
FIG. 20 is an enlarged cross-sectional view of an exemplary stopper of the extendable rod;
FIG. 21 is an enlarged cross-sectional view showing a state that the second stopper of the extendable rod shown in FIG. 18 is released;
FIG. 22 is an enlarged cross-sectional view showing a state that the first stopper of the extendable rod shown in FIG. 18 is released;
FIG. 23 is a partially enlarged perspective view of the wheeled luggage in accordance with the fourth embodiment (of the present invention);
FIG. 24 is a bottom perspective view (showing the bottom face) of the wheeled luggage;
FIG. 25 is a bottom perspective view (showing the bottom face) of the wheeled luggage;
FIG. 26 is a partial back view (showing the base-and-frame assembly) of the wheeled luggage;
FIG. 27 is a partial side view (showing the base-and-frame assembly) of the wheeled luggage;
FIG. 28 is a bottom view (showing a form) of the platform;
FIG. 29 is a bottom view (showing another form) of the platform;
FIG. 30 is a bottom view (showing yet another form) of the platform;
FIG. 31 is a bottom view (showing a further form) of the platform; and
FIG. 32 is a bottom view (showing even another form) of the platform.

### DETAILED DESCRIPTION OF THE PREFERRED EMBODIMENT(S)

The wheeled luggage and its associated base-and-frame assembly of the present invention shall be described hereinafter in detail. The first to third embodiments respectively show only a referential example of the present invention, and the example of the present invention is shown in the fourth embodiment.

### First Embodiment

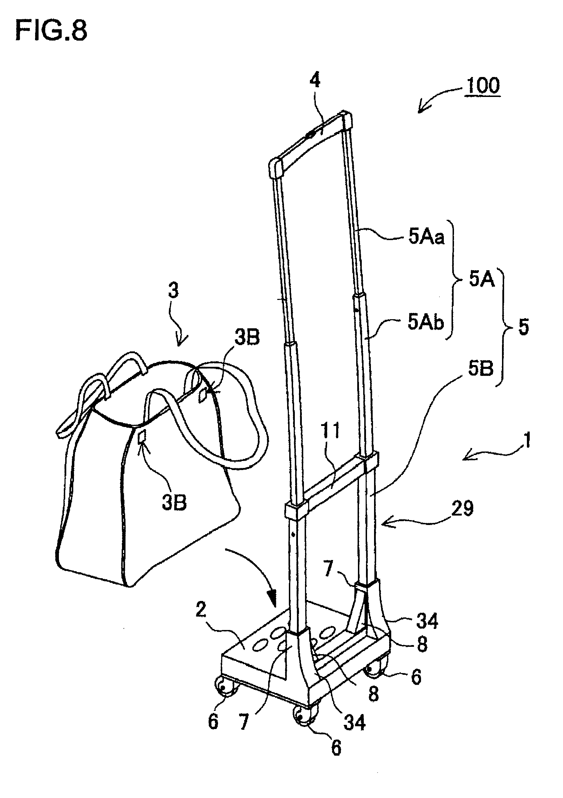

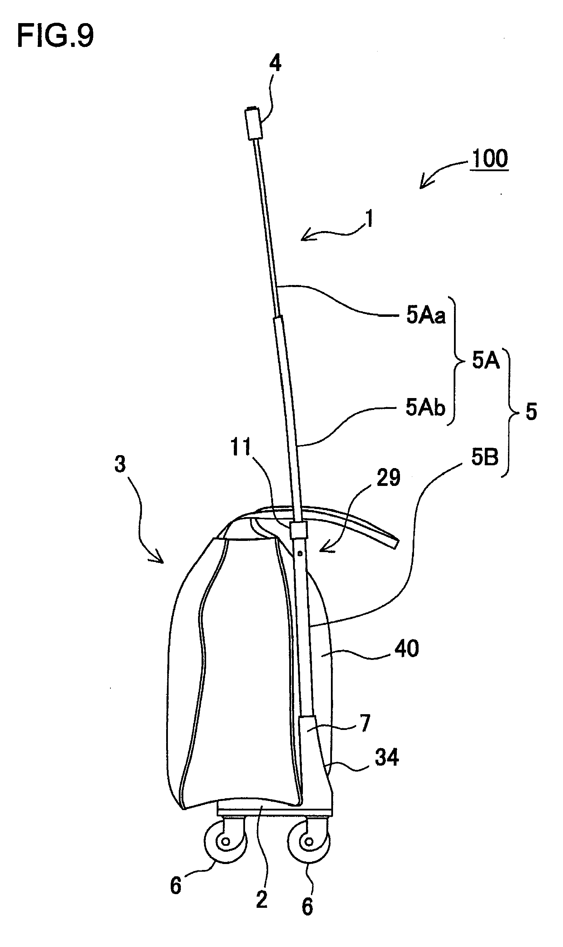

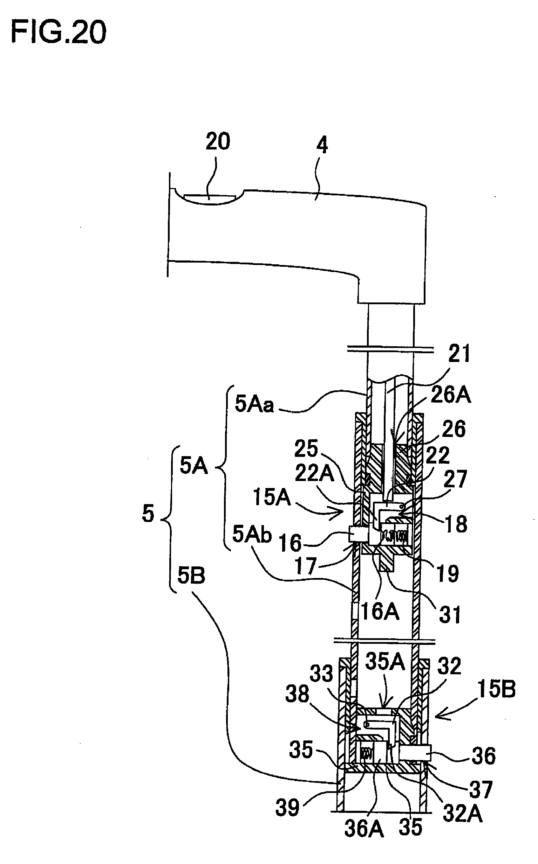

FIG. 8 shows an exploded perspective view of a wheeled luggage 100 (which may sometimes be referred hereinafter to simply as "luggage") in accordance with the first embodiment. Further, FIG. 9 shows a side view showing a state that a separable bag 3 is carried on a carriage surface 2. The wheeled luggage 100 is composed essentially of a separable bag 3 and a base-and-frame assembly 1 which can carry the separable bag 3. The base-and-frame assembly 1 has a carriage surface 2 on which the separable bag 3 is detachably carried. Four corners at the bottom face of the carriage surface 2 are respectively provided with a swivel caster 6 that can travel in free directions. Further, in at least a part of area at one side of the rectangular carriage surface 2, the base-and-frame assembly 1 has a hollow support tube 7 which is substantially vertically uprighted from the carriage surface 2 in an upward direction. An extendable rod 5 that can be vertically extended and retracted is inserted into the hollow core of the support tube 7, and the extendable rod 5 is connected to the support tube 7 so as to self-stand in an upwardly extending posture. The base-and-frame assembly 1 also has a stopper 15 (refer to FIG. 20) for stopping the extendable rod 5 at its extended position. Further, a grip 4 is provided on the top end of the extendable rod 5, so that a user can hold the grip 4 to move the luggage 100 in his/her desired direction. Further, as will be described hereinafter in detail, the luggage 100 carries the advantage that the separable bag 3 can be readily replaced with another bag. In carrying various types of separable bags 3 on the base-and-frame assembly 1, the separable bag 3 is placed on the carriage surface 2, and the separable bag 3 is fixed in a posture of being placed alongside the extendable rods 5.

Further, with reference to FIG. 8 and FIG. 9, the planar carriage surface 3 is rectangular. The carriage surface 2 has one piece of support tube 7 respectively fixed at the opposite ends of the one side which is a long side of the rectangle. The support tube 7 extends in a posture of facing upwardly from the top face of the carriage surface 2, namely, substantially in a direction of the normal of the carriage surface 2, and is provided in an integral formation with the carriage surface 2. That is, the support tube 7 protrudes upwardly from the top face of the carriage surface 2 but does not protrude downwardly to the bottom face. This allows the lower end of the support tube 7 to be prevented from colliding with a traveling ground to interfere with the travel of the luggage 100, and thus a smooth movement becomes possible even on a traveling ground having some extent of irregularity.

Further, since a caster 6 and the support tube 7 respectively are provided separately on the top and bottom faces of the carriage surface 2, a position of such separate formation does not depend on each other and can be freely determined on the respective surfaces. That is, the caster 6 and the support tube 7 are not mounted on the same face of the carriage surface 2, so that the support tube 7 does not have to be provided so as to avoid the fixture position of the caster 6. In the case of FIG. 8 and FIG. 9, both the support tube 7 and the caster 6 are positioned at the corner of the carriage surface 2, and in other words, the caster 6 is mounted substantially in the perpendicular direction from the support tube 7. Thus, force added to the grip 4 is linearly conducted from the support tube 7 to the caster 6, so that the direction of moving the caster is easily controllable to increase stability of the luggage. It is also preferable because the force required for moving the luggage can be decreased.

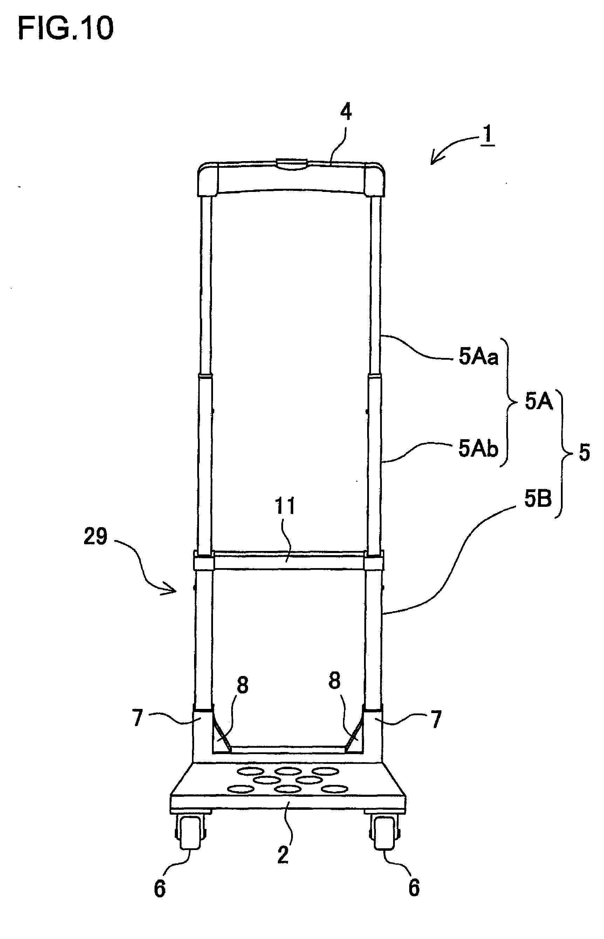

Further, FIG. 10 is a perspective view of the base-and-frame assembly 1 as seen in a direction from the carriage surface 2. As shown in FIG. 10, at the uprighted portion of the support tube 7 protruding upwardly from the top face of the carriage surface 2 substantially in a vertical direction, the base-and-frame assembly 1 is provided with a reinforcement wall 8 connecting the support tube 7 and the carriage surface 2. The reinforcement walls 8 are connected only at the same single side of the carriage surface 2 as the support tubes 7 are connected, and the support tube 7 and the reinforcement wall 8 are positioned substantially in the same plane. That is, both the support tube 7 and the reinforcement wall 8 are positioned in a plane orthogonal upwardly from the single side of the carriage surface, and the respective thickness of the support tube 7 and the reinforcement wall 8 are in a posture of being connected in their respective thickness. To describe further in detail, the reinforcement wall 8 is formed in a position of filling the corner at the area of junction which is composed of the carriage surface 2 and the support tube 7 being substantially orthogonal. Also in the case of FIG. 10, the two support tubes 7 are spaced apart in a mutually parallel relationship, and the reinforcement walls 8 are formed in this space. That is, the reinforcement walls 8 are provided between the two support tubes 7 uprighted upwardly from the opposite ends at the single side of the carriage surface 2, and within a rectangular rod frame 29 surrounded by the carriage surface 2 and by the support tubes 7 and the extendable rods 5. Further, in terms of strength, it is preferred that the reinforcement wall 8 be integrally formed with the carriage surface 2 and the support tube 7.

Further, the reinforcement wall 8 can be provided in a single point or a plurality of points at the corners of the rod frame 29 as shown in FIG. 10. The reinforcement wall 8 in such a case should be so shaped as to be able to at least supplement the corner of the rod frame 29 and to have such an area as can substantially connect the sides which are substantially orthogonal and adjacent to each other. Specifically, the reinforcement wall 8 can be triangular to correspond with the shape of the corner of the rod frame 29 as illustrated and also be polygonal, or it can even be in a variety of shapes such as a curve like a wave or an arch joining the adjacent sides at the right angle of the corner, or a staircase-like shape having a step. In addition, also available is a shape of bridging to connect the opposite support tubes 7 that are inside the rod frame 29. The reinforcement wall 8 can also reduce its weight like by defining interior openings in a dotted pattern, with the overall shape being maintained.

When the reinforcement wall 8 is thus provided, the strength increases in the support tube 7 and the extendable rod 5. In particular, by reinforcing the corner of the rod frame 29 which is an uprighted portion of the support tube 7, the rod frame 29 can be made even more stable to prevent the structure from being distorted. That is, the strength of the extendable rod 5 to the press force can be increased in the horizontal direction, namely in the right-and-left direction as shown in Figure 10.

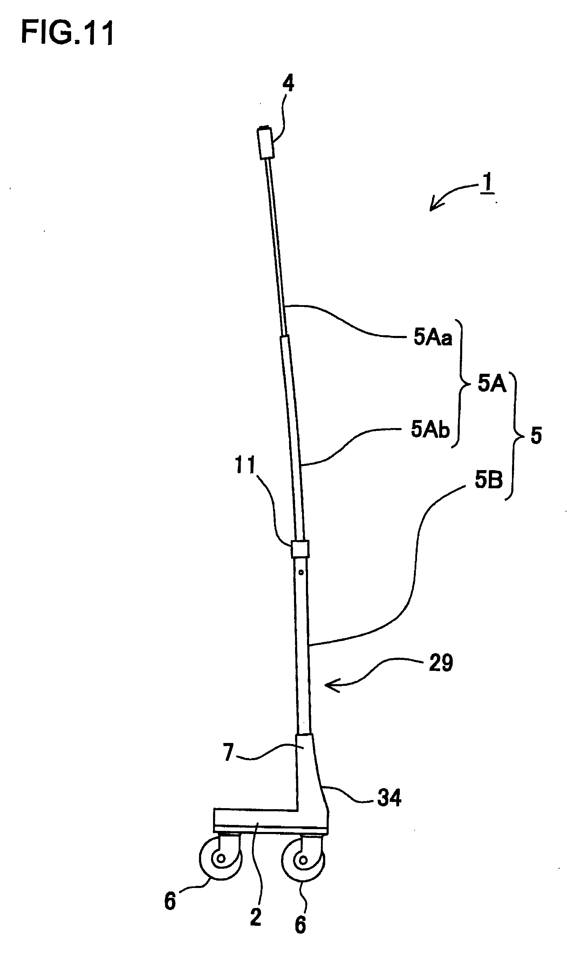

Further, the support tube 7 is provided with a reinforcement base 34 protruding in the thickness direction of the reinforcement wall 8. FIG. 11 is a side view when the base-and-frame assembly 1 is seen from the front left side as shown in FIG. 8. As shown in FIG. 11, the reinforcement base 34 is, at the uprighted portion of the support tube 7, formed to protrude outwardly from the rod frame 29 in a perpendicular direction, namely in the rearward direction of the base-and-frame assembly 1 (in the right direction as viewed in FIG. 11). By thus increasing the contour of the uprighted portion of the support tube 7 to strengthen the construction of support tube 7 to a further extent, the extendable rod 5 connected into the support tube 7 can be stably supported. In terms of strength, it is preferable that, like in the above-mentioned reinforcement wall 8, the reinforcement base 34 be formed integrally with the support tube 7.

With reference to FIG. 11, the support tube 7 has the reinforcement base 34, and the reinforcement base 34 is provided in a full area in the direction perpendicular to the support tube 7. Further, the contour of the support tube 7 becomes larger when coming closer to the carriage surface 2, that is, the reinforcement base 34 is so structured that the protruding extent from the support tube 7 becomes larger downwardly to obtain a larger contour of the support tube 7. In the case of the reinforcement base 34 as shown in FIG. 11, the protruding shape is formed in a lightly slanted or curved state, but the protruding shape and forming area are not limited to such state.

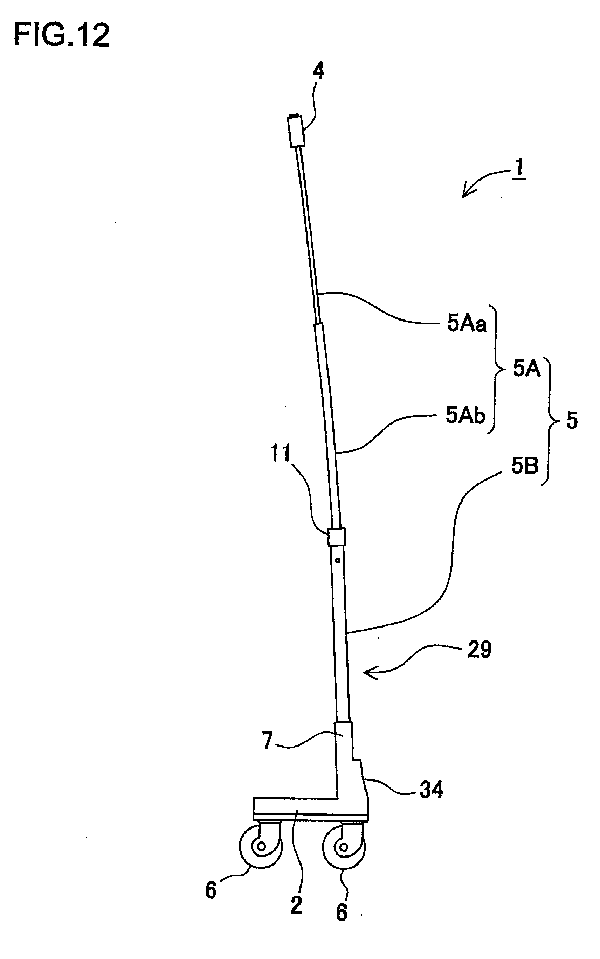

For example, the support tube 7 shown in FIG. 12 is of a cylindrical shape having the same contour in the upper portion. The reinforcement base 34 is formed in a stepped state protruding rearwardly of the base-and-frame assembly 1 toward the carriage surface 2 from the intermediate portion along the longitudinal direction of the support tube 7. Further, the shape of the reinforcement base 34 shown in Figure 12 is so constructed that the contour of the reinforcement base 34 gradually increases when coming closer to the carriage surface 2.

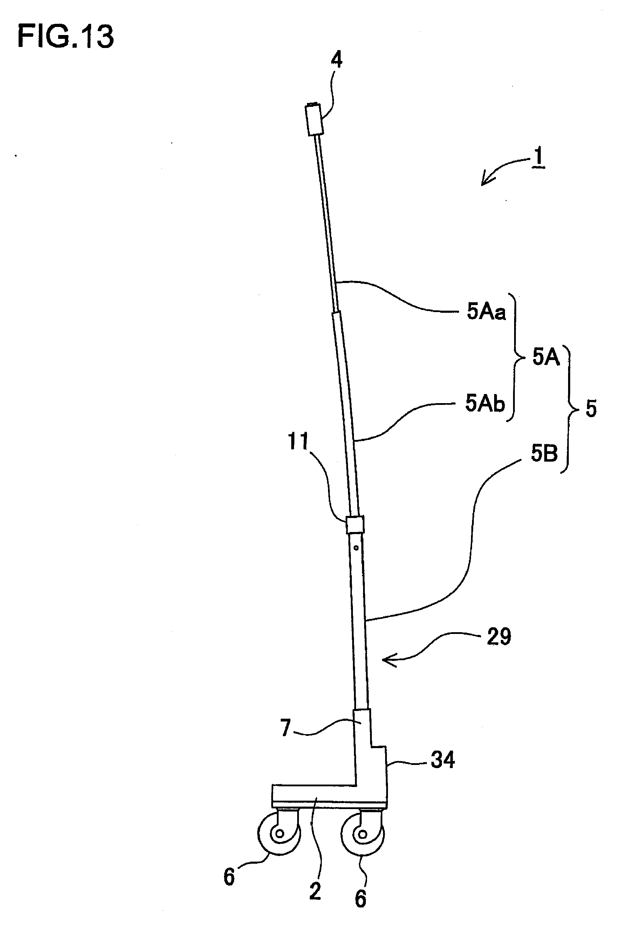

In the case of the support tube 7 shown in FIG. 13, on the other hand, the protruding shape of the reinforcement base 34 has its contour being substantially constant, that is, the rearward side of the support tube 7 is protruded in a shoulder-like step in joint with the reinforcement base 34. In FIG. 12 and FIG. 13, the shoulder-like step is single to make the area as the reinforcement base 34, but the number of such shoulder-like step may be multiple as well, and the contour of the reinforcement base 34 may be so structured as to be either substantially constant or larger downwardly. Thus, by protruding the reinforcement base 34 toward the rearward direction, the support tube 7 and the extendable rod 5 can be made sturdy without a protruding portion being provided toward the carriage surface 2. That is, the strength of the extendable rod 5 is increased in the fore-and-aft direction at the extendable rod 5 (in the right-and-left direction when viewed in FIG. 11 through FIG. 13).

As described above, when the reinforcement wall 8 and the reinforcement base 34 are added to the support tube 7, the rod frame 29 can be reinforced in its horizontal and vertical directions, namely in its fore-and-aft and right-and-left directions. The rod frame 29 being sterically reinforced has its increased resistance to load, and resultantly the rod frame 29 can support the loads of the separable bag 3 and/or the user as well as being able to effectively serve to facilitate the user's ambulation. Further, since the luggage 100 can be kept stably self-standing, a risk of falling down will remarkably be decreased when the luggage is traveled and standing still.

In manufacturing the base-and-frame assembly 1 provided with the carriage surface 2, the support tube 7, the reinforcement wall 8 and the reinforcement base 34, the entirety is integrally formed with plastic or light metal such as aluminum. Therefore, the respective members are interconnected in the process of forming them with the plastic or the light metal. The base-and-frame assembly 1 can increase connection strength respectively in the reinforcement wall 8, the reinforcement base 34, the carriage surface 2 and the support tube 7. It should be noted, however, that in the base-and-frame assembly 1 of the present invention, the respective members may be separately formed and then made up into an adhesively fixed or screwed structure. Further, the respective members to constitute the base-and-frame assembly 1 may be either of the same material or of a plurality of materials, which are optionally selected with a light weight property, strength, etc. being taken into consideration.

Further, the shapes of the extendable rod 5 and the support tube 7 are not specifically limited if only so structured as to allow the extendable rod 5 to be inserted into the hollow core of the support tube 7. For example, in the case of the luggage 100 shown in FIG. 8 through FIG. 11, the support tube 7 is of a prismatic tube to correspond with the extendable rod 5 of a prismatic cylinder. Also available is a combination of a columnar cylinder and a columnar tube. That is, an exterior shape of the extendable rod 5 is preferably similar to an interior shape of the hollow support tube 7. The extendable rod 5 inserted into the support tube 7 is fixed to the support tube 7 by means of a set screw. It should be noted, however, that the extendable rod 5 may be either inserted into the support tube 7 to be adhesively fixed or connected in a fit-in structure that can not be drawn out. Such structure of connecting the extendable rod 5 to the carriage surface 2 allows the extendable rod 5 to be fixed to the carriage surface 2 in a very sturdy structure.

As described above, in the case of the luggage 100 according to the first embodiment, the reinforcement of the support tube 7 and/or the extendable rod 5 is accomplished by providing the reinforcement wall 8 and the reinforcement base 34 on the upper face of the carriage surface 2. Therefore, since a reinforcement member such as the reinforcement wall 8 and the reinforcement base 34 is not provided on the lower face of the carriage surface 2, a position of fixedly mounting the caster 6 to the bottom face of the carriage surface 2 is not specifically limited. That is, the caster 6 can be fixed at a desired position. In particular, by setting the area of forming the reinforcement member to be between the support tubes 7, any obstacle such as a wall can be cleared off the right-and-left direction of the carriage surface 2 as shown in FIG. 10. That is, since a spatial limitation can be extremely reduced in regard to the area of mounting the separable bag 3, an optional choice of the separable bag 3 to be carried on is enlarged. Further, since a position of connecting the support tube 7 to the top face of the carriage surface 2 can be set to be free, a distance of spacing apart the support tubes 7 can be adjusted in accordance with an easy-to-hold length of the grip 7, thus realizing an ideal positioning of the support tubes 7.

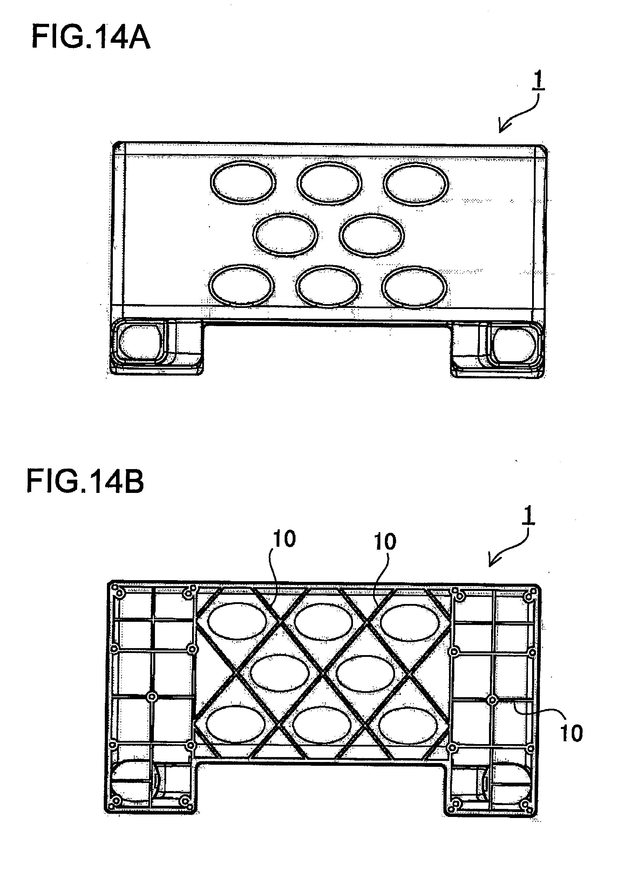

Further, FIG. 14A is a top plan view of the base-and-frame assembly 1, while FIG. 14B is a bottom view of the base-and-frame assembly 1. As shown in FIG. 14, provided on the bottom face of the carriage surface 2 are reinforcement ribs 10 which extend in every direction and are integrally formed with plastic or light metal. In this carriage surface 2, its entirety can be made thinner and yet structured sturdily with the aid of the reinforcement ribs 10. Further, the carriage can be made even lighter in weight by providing through-holes between the reinforcement ribs provided in every direction, the through-holes extending vertically through the carriage surface.

### Method of mounting the separable bag

An explanation shall now be made for a method of mounting the separable bag 3 to the base-and-frame assembly 1. In the case of the luggage 100 shown in FIG. 9, the separable bag 3 is carried on the top face of the carriage surface 2 and adjacent to the extendable rod 5. The luggage 100 is so structured as to detachably mount the separable bag 3. It should be noted, however, that the separable bag 3 can be undetachably fixed as well. Further, the size and the material of the separable bag 3 are not specifically limited. In the case of the separable bag 3 shown in FIG. 9, a flexible sheet is sewn for fabrication.

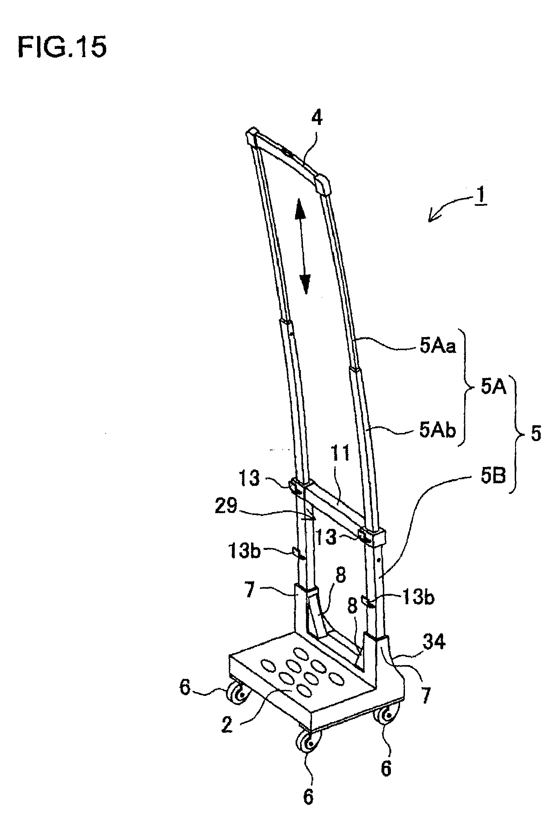

First, the base-and-frame assembly 1 shall be explained. FIG. 15 is a perspective view of the base-and-frame assembly 1. As shown in FIG. 15, the extendable rod 5 is provided with a guide tube 5B and an extraction rod 5A which is inserted into the guide tube 5B in an extendable and retractable manner. Further, although a description shall be made below in detail, the illustrated extraction rod 5A has a two-step extraction function and is composed of an upper extraction rod 5Aa and a lower extraction rod 5Ab.

Further, the base-and-frame assembly 1 shown in FIG. 15 has a connection rod 11 bridged in a direction of being substantially orthogonal to the elongating direction of the extendable rod 5 (in a right-and-left direction as viewed in FIG. 15). The connection rod 11 has a connection piece 13 protruding in the direction of the carriage surface 2, namely, in the front left direction as viewed in FIG. 15. The connection rod 11 is provided at the top end of the guide tube 5B and has the connection piece 13 integrally formed by using plastic or light metal. Further, the connection piece 13 is formed in a shape of protruding upwardly on a face opposite to the separable bag 3, and is inserted into an insertion portion 3B (refer to FIG. 8) provided to the separable bag 3 for connecting the separable bag 3 in a manner that the connection does not come off. The insertion portion 3B of the separable bag 3 is provided with a connection gap with its lower portion being open, where the connection piece 13 is inserted for a mutual connection.

Further, the position of forming the connection piece 13 is not limited to the connection rod 11. For example, the position may also be on the extendable rod 5. For example, another connection piece 13b shown in FIG. 15 is provided on the guide tube 5B constituting the extendable rod 5. When provided on the guide tube 5B, the connection piece 13b can be shorter in distance from the carriage surface 2, so that, even when the height of the separable bag 3 to be carried on is relatively low, the bottom face of the separable bag 3 can securely touch the top face of the carriage surface 2 to allow the separable bag 3 to be stably mounted to the base-and-frame assembly 1. Further, the number of positioning the connection pieces 13, 13b is not specifically limited. For example, in the case of a single piece of connection piece, the separable bag 3 and the base-and-frame assembly 1 can be readily or quickly connected to and released from each other. Alternatively, in a configuration that a plurality of connection pieces are provided at prescribed intervals in the vertical direction, the separable bags 3 of various sizes are applicable, while the connection position of a single piece of separable bag 3 is adjustable with respect to the base-and-frame assembly 1.

### Second Embodiment

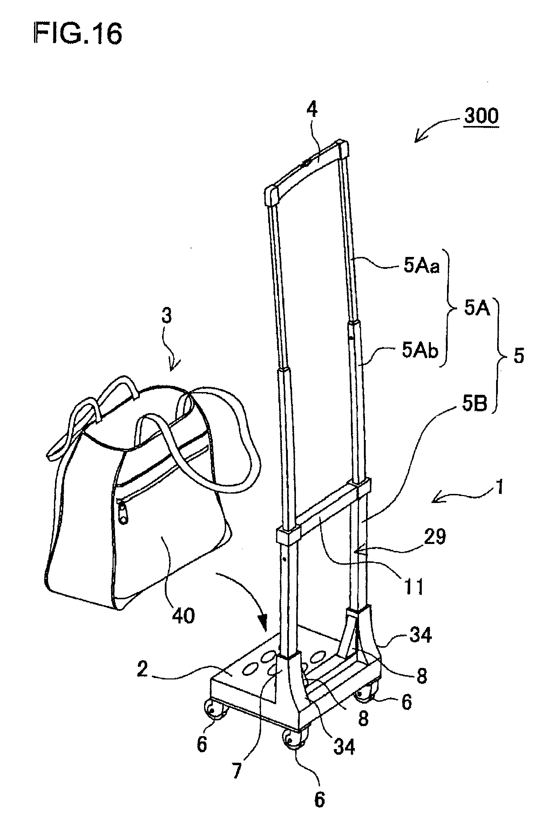

Further, connection means to be used between the separable bag 3 and the base-and-frame assembly 1 is not limited to the one that is described above. Another example of connection means shall be described below as the second embodiment. FIG. 16 is an exploded perspective view of a wheeled luggage 300 in accordance with the second embodiment. When compared with the luggage in accordance with the first embodiment, the luggage 300 shown in FIG. 16 differs only in a method of connecting the separable bag 3 to the base-and-frame assembly 1, with the remaining structure being the same. Therefore, a like structure shall bear a like reference numeral, and no additional explanation shall be made.

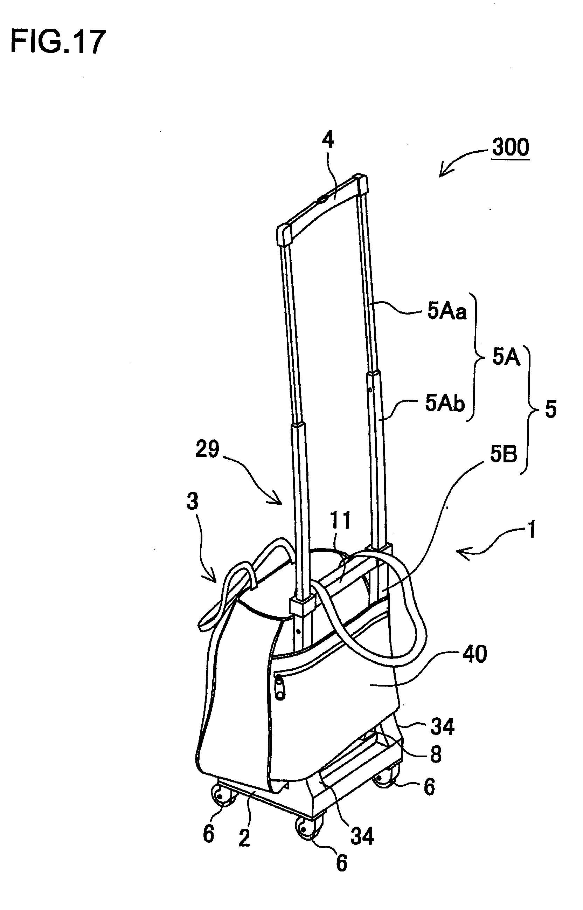

The separable bag 3 in accordance with the second embodiment has an insertion belt 40 opening in a vertical direction as shown in FIG. 16. The grip 4 of the base-and-frame assembly 1 is inserted through the lower portion of the opening, and then the grip 4 is extended upwardly, that is, the extendable rod 5 is inserted through the insertion belt 40. Then, as shown in FIG. 17, the separable bag 3 is carried on the carriage surface 2 of the base-and-frame assembly 1, so that the separable bag 3 can be fixed to the base-and-frame assembly 1. Further, in releasing the separable bag 3 from the base-and-frame assembly 1, the separable bag 3 is lifted to pass through the insertion belt 40, and thus the extendable rod 5 having been inserted through the insertion belt 40 is released. In this manner of connection by inserting a part of the base-and-frame assembly through the insertion portion provided to the separable bag 3, the separable bag 3 and the base-and-frame assembly 1 can be readily connected to and released from each other.

The insertion belt 40 is provided to the outermost surface of the separable bag 3. Although the opening width of the insertion belt 40 can be variably altered, the insertion belt 40 should have a width that at least allows the rod frame 29 to be inserted through, and preferably to the extent that a larger width is given than the width of the rod frame 29. This enables the separable bag 3 and the base-and-frame assembly 1 to be connected readily and stably. In the case of FIG. 16, a rectangular insertion belt 40 is formed on a surface orthogonal to the width direction of the separable bag 3, namely, at least on one of the front and back sides of the separable bag 3. An integral fabrication by sewing the insertion belt 40 and the separable bag 3 is preferred in terms of an easy fabrication, but a fabrication is not specifically limited, and a configuration is also applicable that separate members are preformed and detachably mounted to the separable bag 3. Alternatively, in the vertical openings of the insertion belt 40, the upper side may always be kept open, while the lower side may optionally be made openable and closeable by means of a fastener, etc. Thus, when the separable bag 3 is to be used alone, the lower side of the insertion belt 40 is closed to thus form a pocket used for the separable bag 3. Further, the material of the insertion belt 40 is not specifically limited, and when a material being the same as or different from the material of the separable bag 3 is used, its designability can be improved. An elastic material or a material added with a function such as resistance to friction may also be employed.

Further, a structure may also be applicable that a part of the separable bag 3 surrounds the base-and-frame assembly 1. For example, a pair of strips is provided to the separable bag 3, and when the separable bag 3 is carried on the carriage surface 2, the strips are wrapped around the extendable rod 5 or the carriage surface 2. The both ends of the strip are then interconnected to fix the separable bag 3 to the base-and-frame assembly 1. A connection mechanism between the strips is not specifically limited, but the mechanism includes a button, a hook, a snapper, Velcro® fastener, a belt, a strap, a ring and a zipper. The connection means may be either single or in combination of various kinds.

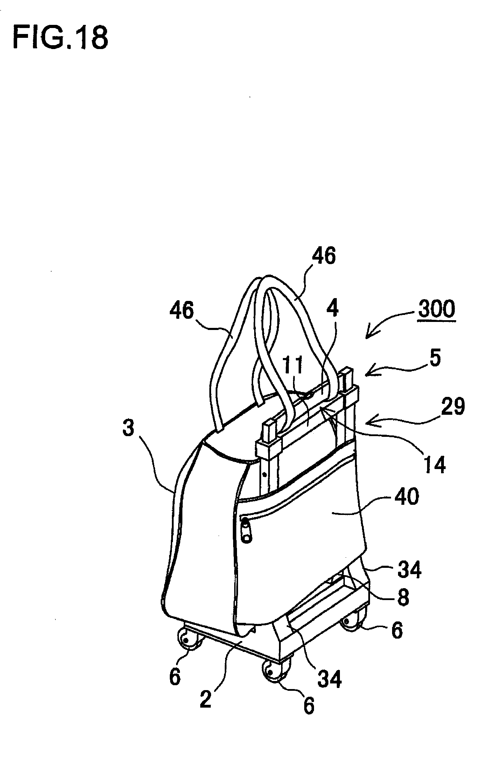

Further, although described below in detail, the extendable rod 5 can be stopped in a prescribed position in a state of being extended and retracted in a vertical direction. As indicated by an arrow in FIG. 15, the base-and-frame assembly 1 is provided with a plurality of stop positions while the extraction rod 5A is moves through the guide tube 5B. For example, when the extraction rod 5A is pushed down, the extraction rod 5A is received in the lower guide tube 5B and stops at its lowest position. FIG. 18 shows the luggage 300 in which the separable bag 3 and the base-and-frame assembly 1 are interconnected by the connection means in accordance with the second embodiment and also illustrates a state that the extendable rod 5 is lowered. As shown in FIG. 18, in a posture that the extendable rod 5 is stopped at its lowest position, the base-and-frame assembly 1 is miniaturized and stored along the separable bag 3. That is, the overall size of the luggage 100 can be substantially the same as that of the separable bag 3, resulting in the entire luggage 300 being lifted up for carriage like by hanging a strap 46 of the separable bag 3 to a user's shoulder or arm. That is, the base-and-frame assembly 1 can be integrally stored for carriage with the separable bag 3, and thus even when the caster 6 is not in use, the luggage 300 can be moved. The luggage 300 is convenient for lifting from the ground and carrying around in the circumstances where the caster 6 is hard to be used on a street with irregularities. In particular, as shown in FIG. 18, in the pair of straps 46 of the separable bag 3, when the strap 46 adjacent to the extendable rod 5 is inserted from the inside to the outside between the grip 4 and the connection rod 11, the strap 46 can support the grip 4 in a manner of wrapping from the lower side to the upper side to facilitate a stable carriage.

Further, as shown in FIG. 8 through FIG. 9 or Fig. 11, etc., when the extendable rod 5 is extended to lift the grip 4, the extendable rod 5 is curved to make the grip 4 eccentric toward the center portion from the one side where the extendable rod 5 is fixed to the carriage surface 2. When the extendable rod 5 is fixed to the right side of the carriage surface 2, the center portion of the carriage surface 2 means the center of the right-and-left direction as illustrated in the drawing. In the case of the luggage 100 shown in FIG. 9, the extendable rod 5 is fixed to the right side of the carriage surface 2, so that when the extendable rod 5 is lifted, the extendable rod 5 is curved to make the grip 4 eccentric from the right side to the left side of the carriage surface 2. In other words, the extendable rod 5 is so designed that its center portion is curved in a direction of protruding outwardly to make the lifted grip 4 eccentric from the side portion of the carriage surface 2 to the direction of being closer to its center portion. In a state that the extendable rod 5 is lifted, the grip 4 does not necessarily have to be positioned at the center portion of the carriage surface 2. This is because, even if the grip 4 is not positioned perfectly at the center portion, the luggage 400 can be moved forward without meandering by pushing the grip 4. In the illustration, when one end face of the carriage surface 2 to which the extendable rod 5 is fixed is set to be zero as a reference and the opposite end face is set to be 100, the lifted grip 4 is positioned for example at 15 to 80%, preferably at 20 to 60%, and more preferably at 20 to 50%.

### Third Embodiment

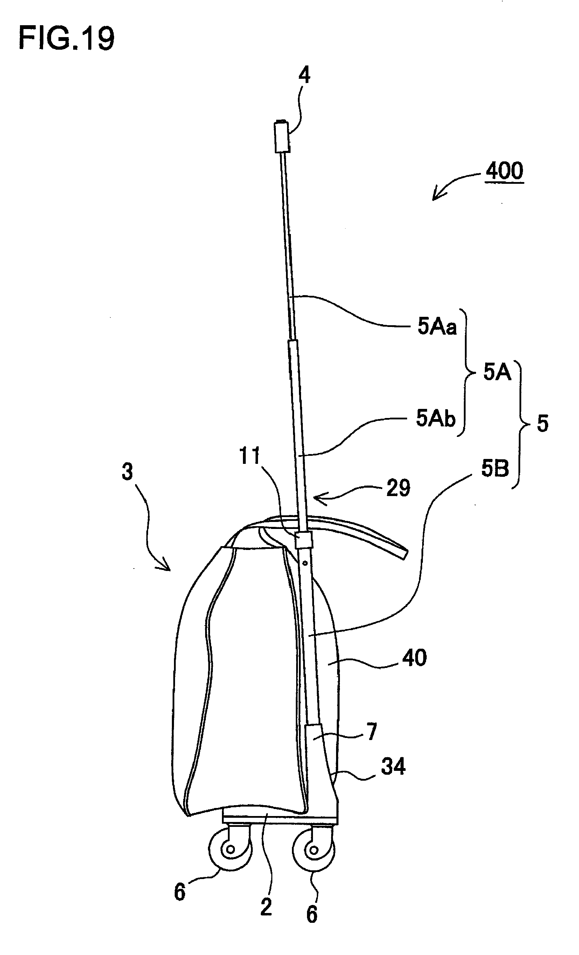

Further, FIG. 19 is a side view of the wheeled luggage 400 in accordance with the third embodiment, in which the extendable rod 5 is slantingly fixed to the carriage surface 2; when the extendable rod 5 is extended to lift up the grip 4, the grip 4 is made eccentric toward the center portion from one side of the carriage surface 2 to which the extendable rod 5 is fixed. In the case of the luggage 400 shown in FIG. 19, since the extendable rod 5 is fixed to the right side of the carriage surface 2, the extendable rod 5 is originally slanted so that when the extendable rod 5 is lifted up, the grip 4 is made eccentric from the right side to the left side of the carriage surface 2. Like the curved extendable rod 4, he slanted extendable rod 5 as well does not necessarily have to be positioned at the center portion of the carriage surface 2 in a state that the grip 4 is lifted up. This is because, even if the grip 4 is not positioned perfectly at the center portion, the luggage 400 can be moved forward without meandering by pushing the grip 4.

Further, although not illustrated, the luggage can also be so designed that the curving extendable rod is slantingly fixed to one side of the carriage surface and the grip is lifted up to be made eccentric toward the center portion from the one side of the carriage surface. In this luggage, when the curving radius of curvature is made large and the angle of inclination is made closer to a right angle, the grip can be lifted to become closer to the center portion of the carriage surface. This is because the lifted grip can be made eccentric toward the center portion from the side portion of the carriage surface both by being inclined and by being curved.

In the case of the luggage in accordance with the above-described embodiment, two pieces of extendable rods 5 are fixed respectively at the opposite ends of the one side of the carriage surface 2. Thus, the structure of disposing the extendable rods 5 at one side of the carriage surface 2 carries the advantage that the bottom area of the separable bag 3 to be placed on the carriage surface 2 can be made larger because the separable bag 3 can be disposed substantially all over the top face of the carriage surface 2. It should be noted, however, that the luggage of the present invention is not limited to the structure that the extendable rods are disposed at the opposite ends of one side of the carriage surface. For example, the extendable rod 5 can also be disposed on one side of the carriage surface but at a position made eccentric to the center portion.

When the extendable rod 5 is in its retracted state, namely when the grip 4 is pushed down to its lowest position, the grip 4 is located at the top of or above the separable bag 3 and stopped by means of the stopper. In the extendable rod 5 with the retracted grip 4 being at its lowest position, the distance is set to be about 50 cm between the bottom face of the caster 6 and the top face of the grip 4. However, the extendable rod 5 can also be so designed that, with the retracted grip 4 being at its lowest position, the distance between the bottom face of the caster 6 and the top face of the grip 4 is set to be preferably 30 to 80 cm, and more preferably 35 to 70 cm. In the state of retracting the extendable rod 5 to bring the grip 4 to its lowest position, the separable bag 3 is made lower than the grip 4 so that the grip 4 is easy to hold. When the extendable rod 5 is in its extended state, namely when the grip 4 is lifted up to its highest position, the height between the bottom face of the caster 6 and the center of the grip 4 is 60 to 100 cm, and preferably 65 to 85 cm, where the grip 4 is stopped by means of the stopper.

As shown in FIG. 15, the extendable rod 5 is provided with the guide tube 5B fixed on the carriage surface 2 for a vertically extension and the two-step extraction rod 5A inserted into the guide tube 5B for extension and retraction, with the grip 4 being fixed at the top end of the upper extraction rod 5Aa. Further, in the two-step extraction rod 5A, the upper extraction rod 5Aa is made narrower than the lower extraction rod 5Ab, with the upper extraction rod 5Aa being inserted into the lower extraction rod 5Ab for extension and retraction. Further, in the extendable rod 5, the lower extraction rod 5Ab is made narrower than the guide tube 5B, with the lower extraction rod 5Ab being inserted into the guide tube 5B for extension and retraction. The guide tube 5B and the extraction rod 5A can be made of metal tubes with different sizes. The guide tube and the extraction rod may also be made by forming plastic or light metal into a prismatic tube. The illustrated extendable rod is so structured as to be extendable in two steps, but the extendable rod can also be structured for a single-step extension or for three-or-more-step extension.

In the case of the luggage shown in the above-mentioned drawings, two pieces of extendable rods 5 are fixed in at least a partial area on one side of the carriage surface 2, with the grip 4 being connected to the top ends of the two pieces of extendable rods 5. Specifically, the two pieces of extendable rods 5 are fixedly located at the opposite corners on one side of the carriage surface 2 or toward the center portion away from the opposite ends.

Further, in the two pieces of extendable rods 5, the top ends of the guide tubes 5B are connected by means of the connection rod 11. The guide rods 5B have their respective lower end fixedly inserted into the support tubes 7 on the carriage surface 2, with their respective top ends being connected by means of the connection rod 11. Thus, the structure that the top ends of the guide tubes 5B are connected by means of the connection rod 11 serves to reinforce the two extendable rods 5 for self-standing in a more stable state. Defined between the connection rod 11 and the grip 4 at its lowest position as shown in FIG. 18 is the insertion gap 14 to allow a user's hand or the strap 46 of the separable bag 3 to be inserted through. This is for the purpose of making the lowered grip 4 easy to hold. The illustrated grip 4 in its entirety is formed with inverted U-shaped plastic or light metal, and the foldable ends are respectively connected to the extraction rods 5A, defining the insertion gap 14.

The stopper can use every kind of mechanism that can stop the extraction and retraction of the extendable rod 5. An exemplary stopper is illustrated in FIG. 20 through FIG. 22. The extendable rod 5 shown in these drawings is so structured as to extract and retract the two-step extraction rod 5A, so that two pieces of stoppers 15 are provided at the upper and lower positions. The first stopper 15A stops the extraction and retraction of the upper extraction rod 5Aa and the lower extraction rod 5Ab. The second stopper 15B stops the extraction of the lower extraction rod 5Ab and the guide tube 5B. Further, the retraction of the lower extraction rod 5Ab and the guide tube 5B is stopped by means of the first stopper 15A.

The first stopper 15A includes a protrusion pin 16 disposed at the lower end of the upper extraction rod 5Aa to elastically protrude toward the lower extraction rod 5Ab, an engagement portion 17, provided at the lower extraction rod 5Ab, into which the protrusion pin 16 is inserted, and a first release mechanism 18 for forcibly extracting the protrusion pin 16 out of the engagement portion 17. The second stopper 15B includes a protrusion pin 36 disposed at the lower end of the lower extraction rod 5Ab to elastically protrude toward the guide tube 5B, an engagement portion 37, provided at the guide tube 5B, into which the protrusion pin 36 is inserted, and a second release mechanism 38 for forcibly extracting the protrusion pin 36 out of the engagement portion 36.

The protrusion pin 16 is disposed via an elastic member 19 inside the lower end of the upper extraction rod 5Aa so as to elastically protrude toward the peripheral direction of the extraction rod 5A. The protrusion pin 36 is disposed via an elastic member 39 inside the lower end of the lower extraction rod 5Ab so as to elastically protrude toward the peripheral direction of the extraction rod 5A. These protrusion pins 16, 36 are respectively pushed by the elastic members 19, 39 and protrude elastically out of the extraction rod 5A. The protrusion pins 16, 36 are disposed in the extraction rod 5A so as to protrude in mutually opposite directions. The illustrated extendable rod 5 is so structured that the protrusion pin 16 is protruded inwardly, namely in the direction of the opposing extendable rod 5, and that the protrusion pin 36 is protruded outwardly, namely in the direction opposite to the opposing extendable rod 5.

The engagement portions 17, 37 are through-holes or concaved portions into which the protrusion pins 16, 36 are respectively inserted. The illustrated lower extraction rod 5Ab and guide tube 5B open the through-holes for allowing the protrusion pins 16, 36 through and serve as the engagement portions 17, 37. Thus, the structure of preparing the engagement portions 17, 37 in the form of the through-holes carries the advantage that the protrusion pins 16, 36 inserted in the engagement portions are extended through the through-holes to be protruded and the extendable rod 5 can be securely stopped. This means, in particular, that the extendable rod 5 can be safely used in lieu of a walking stick, namely when the grip 4 bears a load of user's body weight. This is because the protrusion pins 16, 36 can be effectively prevented from coming off the engagement portions 17, 37 unexpectedly, without the extendable rod 5 being pushed back. Further, when the grip 4 is held by a hand to lift the whole luggage, the extendable rod 5 can be advantageously prevented from being extracted unexpectedly. Thus, the stopper 15 which can securely fix the position of the extraction rod 5A carries the advantage that the stopper 15 can be used very safely when the grip 4 is in its lifted position as well as in its lowered position. It is to be noted that the engagement portion can be a concavity to allow the tip of the protrusion pin to be inserted in the engagement portion.

Although not illustrated, the engagement portion 17 provided at the lower extraction rod 5Ab is provided at the positions of inserting the protrusion pin 16 where the upper extraction rod 5Aa is lifted to the highest level, where the rod is lifted to a middle level, and where the rod is lowered to the lowest level. Thus, when the upper extraction rod 5Aa is lifted to the uppermost level, the protrusion pin 16 is inserted into the uppermost engagement portion 17; when the upper extraction rod 5Aa is lowered to the lowest level, the protrusion pin 16 is inserted in the lowermost engagement portion 17; and further when the upper extraction rod 5Aa is lifted to the middle level, the protrusion pin 16 is inserted in the middle engagement portion 17, so that the extension and retraction of the extendable rod 5 is stopped at each level. In this way, the extendable rod 5 provided with the engagement portion 17 in the middle of the lower extraction rod 5Ab carries the advantage that the upper extraction rod 5Aa can be extended and retracted in accordance with a plurality of levels. It should be noted, however, the upper extraction rod does not necessarily have to be so structured as to stop in the middle level; the extraction rod may be designed to stop in the uppermost and lowermost positions only. Further, the upper extraction rod can also be so arranged that a plurality of engagement portions are provided in the middle portion of the lower extraction rod, so that the upper extraction rod lifted to a middle level can be stopped at a plurality of positions. In such extendable rod, an optimal position of the grip can be selected by incrementally shifting the position of the grip in its vertical direction.

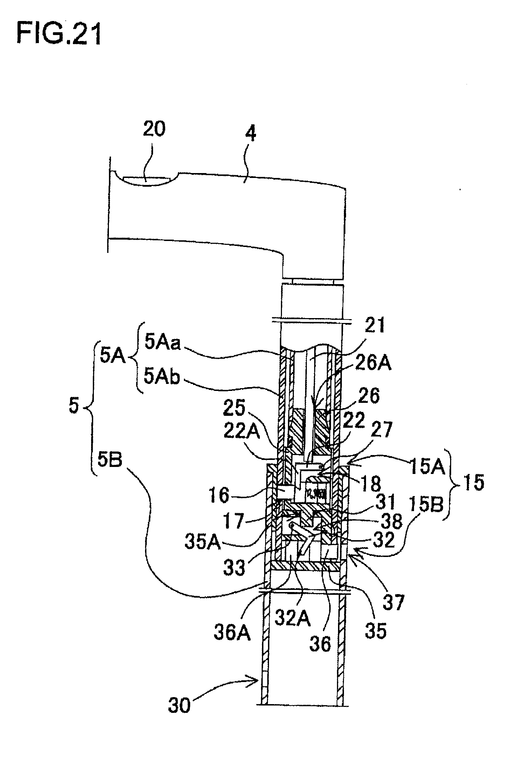

The engagement portion 37 provided to the guide tube 5B is provided at a position of inserting the protrusion pin 36 in a state where the lower extraction rod 5Ab is lifted to its upper most level. In a state that the lower extraction rod 5Ab is lifted to its uppermost level, the protrusion pin 36 is inserted into the engagement portion 37, and the extension of the lower extraction rod 5Ab is stopped. Further, as shown in FIG. 21, the guide tube 5B is provided with an engagement portion 30 into which the protrusion pin 16 is inserted when the upper extraction rod 5Aa and the lower extraction rod 5Ab are positioned at their lowermost levels. The engagement portion 30 is provided at a position where the protrusion pin 16 is inserted which extends through the lowermost engagement portion 17 of the lower extraction rod 5Ab which is at its lowered level. That is, in a state that the upper extraction rod 5Aa and the lower extraction rod 5Ab are at their lowermost level, the extendable rod 5 is stopped in a state of its shortest retraction when the protrusion pin 16 is inserted into the engagement portion 17 of the lower extraction rod 5Ab and the engagement portion 30 inside the guide tube 5B. In this way, the protrusion pin 36 is inserted into the engagement portion 37 outside the guide tube 5B, the extension of the lower extraction rod 5Ab is stopped, the protrusion pin 16 is inserted into the engagement portion 30 provided inside the guide tube 5B, and the retraction of the lower extraction rod 5Ab is stopped.

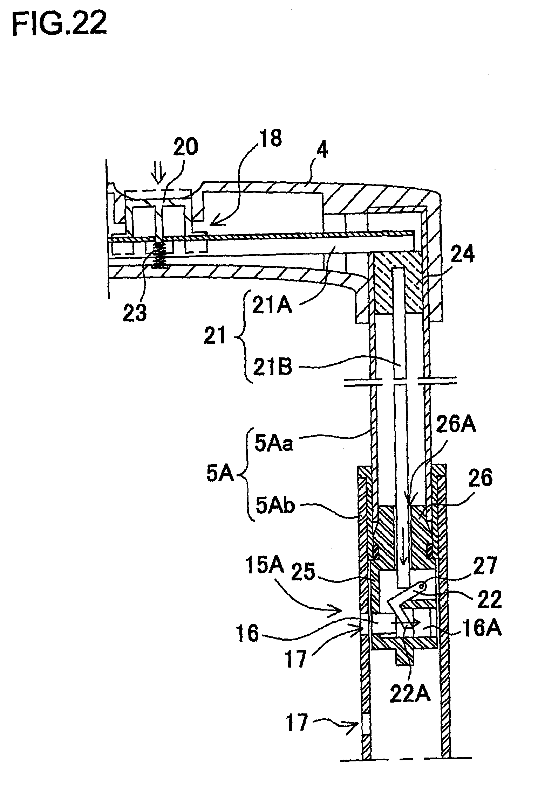

As shown in FIG. 22, the first release mechanism 18 includes a push button 20 provided at the grip 4, a driving rod 21 connected to the push button 20 to be vertically moved by the push button 20, and a pivotable piece 22 pushed by the lower end of the driving rod 21 for pivoting/rotating in a direction of forcibly drawing back the protrusion pin 16.

The push button 20 is disposed at the center portion on the top face of the grip 4 so as to be vertically moved. The push button 20 is connected via an elastic substance 23 to the inner bottom face of the grip 4, and is pushed out elastically via the elastic substance 23. The push button 20 has, at its lower face, the driving rod 21 connected; and when the push button 20 is vertically moved by a user's thumb or finger, the driving rod 21 is designed to be vertically driven.

The driving rod 21 is disposed inside the grip 4 and the upper extraction rod 5Aa and is driven vertically by the push button 20 to pivot the pivotable piece 22. The driving rod 21 shown in FIG. 22 includes a horizontal rod 21A connected to the lower face of the grip 4, and a vertical rod 21B inserted into the upper extraction rod 5Aa. The opposite ends of the horizontal rod 21A are respectively positioned above the upper ends of the vertical rod 21B, and when the horizontal rod 21A is pushed down, the vertical rod 21B is designed to be pushed downwardly. The vertical rod 21B has its upper end inserted into an insertion cap 24 which vertically moves in the upper extraction rod 5Aa, so that the vertical rod 21B can accurately move vertically in the upper extraction rod 5Aa. It should be noted, however, that the opposite ends of the horizontal rod can also be connected respectively to the upper ends of the vertical rods. For example, the driving rod can also be fabricated to be a single-piece rod folded in a "U" shape. The lower end of the driving rod 21 is extended to the lower end of the upper extraction rod 5Aa.

The pivotable piece 22 is disposed at the lower end of the upper extraction rod 5Aa and pivots in a direction of forcibly drawing back the protrusion pin 16 when pushed by the lower end of the driving rod 21. The illustrated upper extraction rod 5Aa has, at its lower end, a guide cap 25 connected, inside which the pivotable piece 22 is mounted to be pivotable in a vertical plane. In order to ensure an accurate vertical movement of the lower end of the driving rod 21, the guide cap 25 has an insertion hole 26A defined at a connection tube 26 inserted into the upper extraction rod 5Aa, the insertion hole 26A allowing insertion of the driving rod 21. The pivotable piece 22 is bent into an "L" shape in its entirety, with its one end being connected via a pivotable shaft 27 to the guide cap 25 and with its other end at its opposite sides being provided with a pin 22A protruding toward the protrusion pin 16. When pivoting by being pushed by the driving rod 21, the pivotable piece 22 allows the tip of the pin 22A to engage the protrusion portion 16A provided at the opposite ends of the protrusion pin 16, and pushes and forcibly retracts the protrusion pin 16 by means of the pivoting pin 22A. When the pushing action by the driving rod 21 is released, the protrusion pin 16 is not pushed by the pin 22A of the pivotable piece 22, and thus the pivotable piece 22 is pivoted to return to its original posture by being elastically pushed out by the elastic member 19 shown in FIG. 20.

In the first release mechanism 18 described above, when the push button 20 is pushed, the driving rod 21 is pushed downwardly and the pivotable piece 22 disposed at the lower end of the driving rod 21 is pivoted. The pivotable piece 22 thus pivoting moves, by the tip of the pin 22A, the protrusion pin 16 in a direction of being drawn back and draws the protrusion pin 16 out of the engagement portion 17. In this state, the first stopper 15A is released and the upper extraction rod 5Aa comes to a state of being vertically movable in the lower extraction rod 5Ab. When the push button 20 is released, the protrusion pin 16 is pushed by the elastic member 19 and comes to a state that the protrusion pin 16 can protrude toward the lower extraction rod 5Ab.

When the push button 20 for the first release mechanism 18 provided to the grip 4 is pushed, the first stopper 15A forcibly draws back the protrusion pin 16 to release the state of engagement. In this state, the upper extraction rod 5Aa is lifted or lowered. The upper extraction rod 5Aa where the protrusion pin 16 is drawn back moves vertically in the lower extraction rod 5Ab. When the grip 4 is adjusted to reach a prescribed height after the push button 20 is released, the protrusion pin 16 is guided into the engagement portion 17, the extension and retraction of the upper extraction rod 5Aa is stopped, and the grip 4 stops rising and lowering.

The second release mechanism 38 includes an insertion rod 31 provided at the lower end of the upper extracting rod 5A, and a pivotable piece 32 pushed by the lower end of the insertion rod 31 to pivot in a direction of forcibly drawing back the protrusion pin 36.

The insertion rod 31 is provided in a manner of protruding downwardly at the lower face of the guide cap 25 fixed to the lower end of the upper extraction rod 5A. The insertion rod 31 is inserted into the insertion hole 35A of the guide cap 35 fixed at the lower end of the lower extraction rod 5Ab and pivots the pivotable piece 32 by pushing the upper face of the pivotable piece 32 at the lower end.

The pivotable piece 32, being disposed at the lower end of the lower extraction rod 5Ab, is pushed by the lower end of the insertion rod 31 and pivots in a direction of forcibly drawing back the protrusion pin 36. The illustrated lower extraction rod 5Ab has, at its lower end, the guide cap 35 connected, and the pivotable piece 32 is mounted in the guide cap 35 so as to be able to pivot in a vertical plane. The guide cap 35 has the insertion hole 35A defined at the top face to allow the insertion rod 31 to be inserted. The pivotable piece 32 is folded in an "L" shape in its entirety, with its one end being connected via the pivotable shaft 33 to the guide cap 35 and with the opposite sides of its other end being provided with the pin 32A protruding toward the protrusion pin 36. When pivoting by being pushed by the insertion rod 31, the pivotable piece 32 allows the tip of the pin 32A to engage the protrusion portion 36A provided on opposite sides of the protrusion pin 36, and the protrusion pin 36 is pushed by the pin 32A thus pivoting for forcible retraction. When the press force of the insertion rod 31 is released, the protrusion pin 36 is not pushed by the pin 32A of the pivotable piece 32, and thus the pivotable piece 32 is pivoted to its original posture by being elastically pushed by the elastic member 39.

In the second release mechanism 38 described above, when the upper retraction rod 5Aa is pushed downwardly to the deepest portion of the lower retraction rod 5Ab, the insertion rod 31 is inserted into the insertion hole 35A of the guide cap 35, and the pivotable piece 32 disposed at the lower end of the lower retraction rod 5Ab is pivoted. The pivotable piece 32 thus pivoting moves the protrusion pin 36 by the tip of the pin 32A in the direction of being drawn out, and draws the protrusion pin 36 out of the engagement portion 37. In this state, the second stopper 15B is released, and the lower extraction rod 5Ab comes to a state of being vertically movable in the guide tube 5B. At this time, the protrusion pin 16 of the first stopper 15A is inserted in the engagement portion 17 provided at the lowermost position of the lower retraction rod 5Ab, and the insertion rod 31 is maintained in a state that the insertion rod 31 is inserted into the insertion hole 35A of the guide cap 35. Thus, the protrusion pin 36 is maintained in a state of being moved in the direction of being drawn back by the pivotable piece 32. In this state, the upper retraction rod 5Aa and the lower retraction rod 5Ab are interconnected in a retracted state, with the upper retraction rod 5Aa and the lower retraction rod 5Ab moving vertically in the guide tube 5B in an integrally connected state.

Further, when the upper retraction rod 5Aa and the lower retraction rod 5Ab which are integrally connected is inserted in the deepest portion of the guide tube 5B, the protrusion pin 16 of the first stopper 15A is inserted into the engagement portion 30 provided inside the guide tube 5B. In this state, the retraction of the extendable rod 5 is stopped and the grip 4 stops in its lowermost state. In releasing the engagement state of the protrusion pin 16 and the engagement portion 30, the push button 20 of the first release mechanism 18 is pushed to draw back the protrusion pin 16 away from the engagement portion 30. In this state, the lower retraction rod 5Ab comes to the state of being vertically movable in the guide tube 5B.

Further, in stopping the retraction of the lower retraction rod 5Ab, the push button 20 of the first release mechanism 18 is pushed to forcibly draw back the protrusion pin 16 and release the first stopper 15A, and thus the upper retraction rod 5Aa is drawn out of the lower retraction rod 5Ab. At this time, the insertion rod 31 is drawn out of the insertion hole 35A of the guide cap 35, with the protrusion pin 36 being protruded by the elastic member 39. In this state, the lower retraction rod 5Ab is drawn out, the protrusion pin 36 is inserted into the engagement portion 37 provided at the upper end of the guide tube 5B, and the retraction of the lower retraction rod 5Ab is stopped.

In the stopper 15 with the above described structure, the retraction rod 5A can stop, at a prescribed position, the extendable rod 5 which is extended and retracted in two steps. It should be noted, however, that in the luggage of the present invention the stopper is not limited to the above-described structure. The stopper can be of any mechanism that can stop the extendable rod at a prescribed position.

### Fourth Embodiment

Further, the platform 102 of the wheeled luggage is provided with a reinforcement rib protruding on the bottom face of the carriage plate 9. The reinforcement rib is provided in an integral formation with a latitudinal reinforcement rib 112A extending laterally on the lower face of the carriage plate 9 and protruding downwardly. Further, the latitudinal reinforcement rib 112A allows the area positioned below the support tube 7 to protrude downwardly to serve as a reinforcement protrusion 108. The reinforcement protrusion 108 reinforces the structure of the base-and-frame assembly 1 to be more sturdy. With the wheeled luggage 500 provided with the reinforcement protrusion 108 as the fourth embodiment, a detailed description shall be made below. It should be noted, however, that the member having the same function as in the first embodiment through the third embodiment shall bear the same reference numeral, and a detailed description shall be omitted. Further, in order to prominently indicate the characteristics of a particular member in accordance with the fourth embodiment, an illustration of other members may sometimes be omitted.

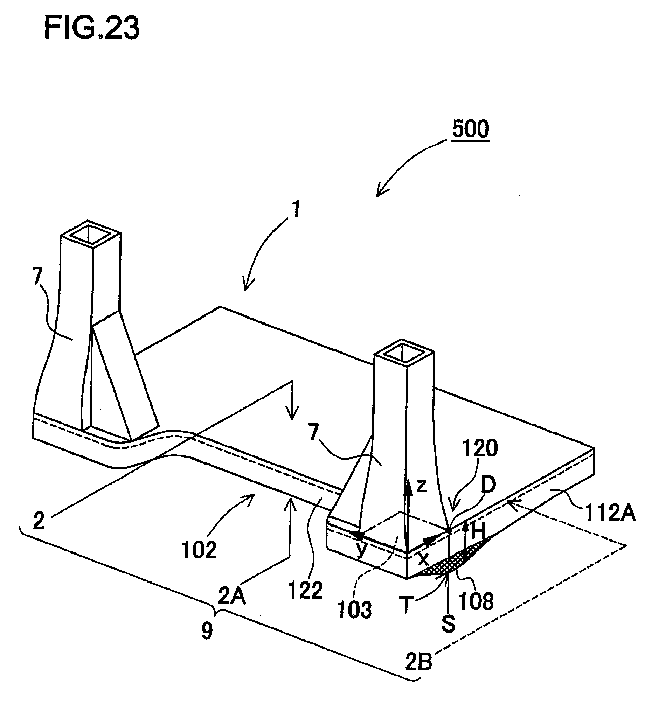

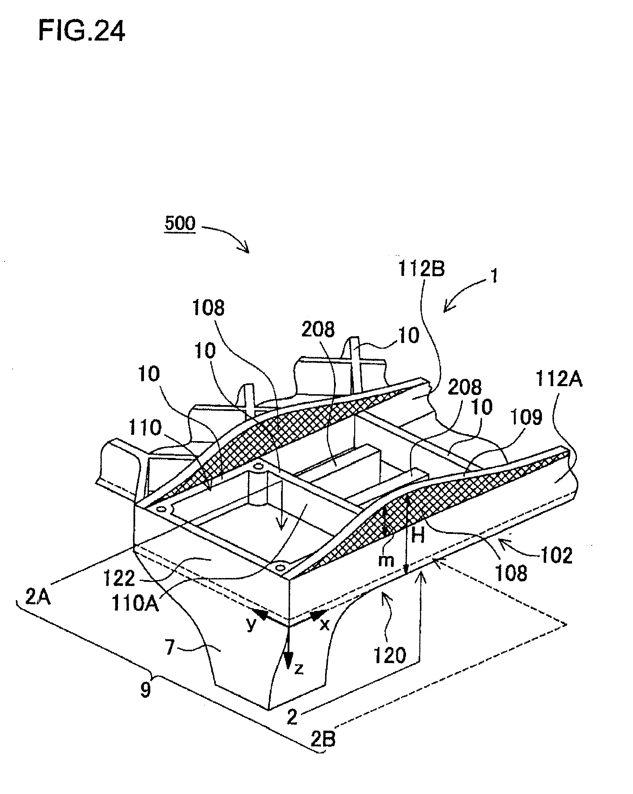

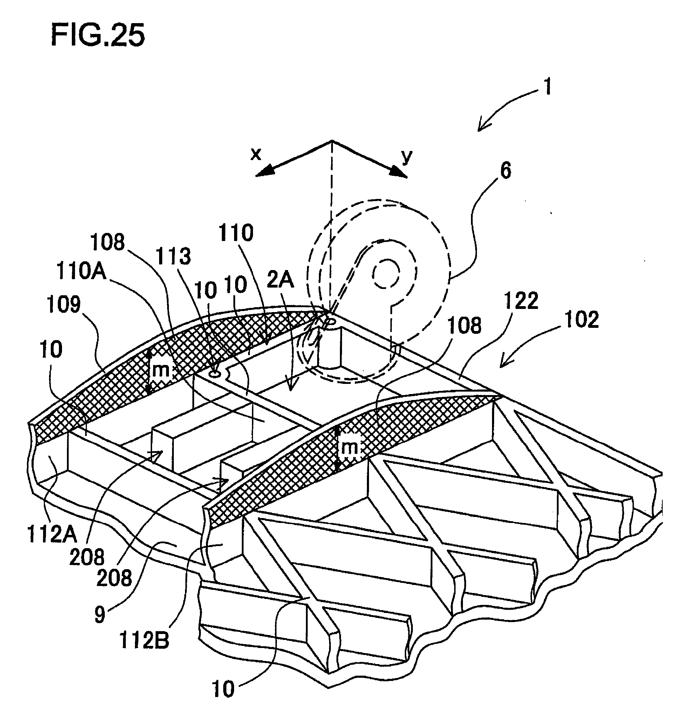

FIG. 23 is a partially enlarged perspective view of the wheeled luggage 500 in accordance with the fourth embodiment, showing a perspective view of the base-and-frame assembly 1 as seen from the back side of the luggage 500. Further, FIG. 24 and FIG. 25 respectively are a perspective view when the wheeled luggage 500 is seen from the bottom side, namely a partially enlarged view showing the back side of the carriage surface shown in FIG. 23. In particular, FIG. 24 shows a perspective view of the bottom face 2A as seen from the rear side, while FIG. 25 shows a perspective view of the bottom face 2A as seen from the front side. Further, the caster is indicated by a dotted line in FIG. 25, and the illustration of the caster is omitted in FIG. 24. Further, in the present disclosure, the naming of the direction shall be defined as follows. That is, the corner of the carriage plate 9 to which the support tube 7 is connected shall be a point of reference, with a shorter side of the rectangular carriage plate 9 being in the direction of an X axis, with a longer side being in a Y axis, and with the axial direction of the support tube 7 and at the same time the direction substantially corresponding with the direction of normal of the carriage plate 9 being in the direction of Z axis (in the upward direction as viewed in FIG. 23). Further, the longer side of the carriage plate 9 shall be named as being longitudinal, and the shorter side shall be named as being latitudinal.

Like in the first embodiment, the wheeled luggage 500 in accordance with the fourth embodiment includes a separable bag 3 and a base-and-frame assembly 1 on which the separable bag can be carried. As shown in FIG. 23, the base-and-frame assembly 1 has a platform 102 on which the separable bag 3 is detachably carried. The platform 102 has a planar carriage plate 9 being connected with a support tube 7 in a posture of substantially upwardly extending from the opposite sides on one side of the carriage plate 9. Further, the top face of the carriage plate 9 serves as a carriage surface 2, on which the separable bag 3 can be carried in mutual contact. The carriage plate 9 further includes a bottom face 2A opposite to the carriage surface 2, and a side face 2B located along the circumference of the carriage plate 9.

The platform 102 shown in FIG. 23 is provided with a reinforcement rib in the circumference and on the bottom face side of the carriage plate 9. The reinforcement rib provided to the carriage plate 9 is provided so as to protrude downwardly to be substantially perpendicular to the carriage surface 2 and does not protrude superjacent to the carriage surface 2. This enables a carriage area to be widely secured for the separable bag 3, without the reinforcement rib of the carriage plate 9 protruding on the carriage surface. Further, the reinforcement rib circumscribing the carriage plate 9 which is rectangular in its entire shape has a latitudinal reinforcement rib 112A disposed in a parallel relationship with the shorter side of the carriage plate 9 and a longitudinal reinforcement rib 122 disposed in a parallel relationship with the longer side of the carriage plate 9.

The latitudinal reinforcement rib 112A has a reinforcement protrusion 108 (a cross-hatched portion in FIG. 23) which further protrudes the lower edge downwardly. The reinforcement protrusion 108 is provided in an integral formation with the latitudinal reinforcement rib 112A. Further, the reinforcement protrusion 108 is provided so as to be positioned below the portion connecting the carriage plate 9 with the support tube 7. The reinforcement protrusion 108 shown in FIG. 23 is integrally formed with the latitudinal reinforcement rib 112A, protruding downwardly so as to be positioned at the portion connecting the carriage plate 9 with the support tube 7. More specifically, the reinforcement protrusion 108 is provided along the edge of the junction face 103 (indicated by a chain line in FIG. 23) where the support tube 7 is jointed with the carriage surface 2. Further, the reinforcement protrusion 108 is disposed in a posture of being substantially orthogonal to the junction face 103. The reinforcement protrusion 108 improves the bending strength of the latitudinal reinforcement rib 112A in a vertical plane, and also improves the bending strength of the carriage plate 9, so that the support tube 7 fixed on the top face may be securely and sturdily fixed so as not to tilt in the vertical plane. In the case of FIG. 23, the reinforcement protrusion 108 is configured to be provided at a partial portion of the latitudinal reinforcement rib 112A, and specifically, is disposed with a limitation to only the portion of connecting the support tube 7 and the carriage surface 2. In this configuration, the latitudinal reinforcement rib 112A provided with the reinforcement protrusion 108 is so structured as to be protruding even more downwardly than other area in the vicinity of the portion where the carriage plate 9 and the support tube 7 are interconnected, so that the portion of connecting the carriage plate 9 with the support tube 7 can be intensively reinforced. Further, when the reinforcement protrusion 108 has a larger overall length in its latitudinal direction, the strength of the platform 102 can be increased that much, while when the reinforcement protrusion 108 has a smaller overall length in its latitudinal direction, the platform 102 can be made lighter in its entire weight. The reinforcement protrusion 108 can be 3 cm to 10 cm and preferably 5 cm to 8 cm in the overall length in a lengthwise direction of the latitudinal reinforcement rib. When the overall length of the reinforcement protrusion 108 in the latitudinal direction (X-axis direction) falls within the above-mentioned range, it is preferable because the strength and the light weight of the platform 102 can be compatible. Further, the reinforcement protrusion can be provided not only to the latitudinal rib but also to the longitudinal rib. The reinforcement protrusion provided to the longitudinal rib is also provided below the support tube and reinforces the carriage plate to which the support tube is connected.

The outer face of the reinforcement protrusion 108 is not provided with any stepped portion with respect to the side face 2B of the carriage plate 9 and the outer face of the latitudinal reinforcement rib 112A and is made substantially flush with each other. By being designed to be flush from the side face 2B to the latitudinal reinforcement rib 112A and further to the reinforcement protrusion 108, the latitudinal reinforcement rib 112A having the reinforcement protrusion 108 can reinforce the base-and-frame assembly 1, without being extended in the longitudinal direction of the carriage plate 9. Designability is also excellent. A configuration is also possible in which the reinforcement protrusion 108 is optionally added to the carriage plate 9 of the base-and-frame assembly in accordance with the first to third embodiments or a variant embodiment, so that the base-and-frame assembly 1 can be optionally reinforced.

It is preferable that the carriage plate 9, the latitudinal reinforcement rib 112A and the reinforcement protrusion 108 entirely in the platform 102 be integrally formed using the same material such as plastic. This is because, when the same material is used for each member constituting the platform 102 to integrally form the platform 102, the strength of the base-and-frame assembly 1 can be increased and the manufacture can be simplified with the reduced number of components in the whole. The reinforcement protrusion 108 is provided at the portion of connecting the carriage surface 2 and the support tube 7 by being formed in a shape in which the protruding extent is enlarged downwardly of the latitudinal reinforcement rib 112A in the area adjacent to the potion where the support tube 7 uprights from the carriage surface 2. Further, the reinforcement protrusion 108 shown in FIG. 23 has the largest protruding extent below the junction point "D" in the circumference of the junction face 103 of the support tube 7 and the carriage surface 2 and where the carriage surface 2 and the uprighted portion of the support tube 7 join together substantially at a right angle as flat-viewed from the side face 2B. This structure can most effectively reinforce the portion of connecting the carriage plate 9 and the support tube 7 by means of the latitudinal reinforcement rib 112A having the reinforcement protrusion 108.

Further, the latitudinal reinforcement rib 112A having the reinforcement protrusion 108 may be so shaped as to increase the protruding extent "H" of the latitudinal reinforcement rib 112A, centering at the uprighted portion of the support tube 7 where a stress is liable to be applied on the carriage surface 2, and to decrease the protruding extent "H" of the latitudinal reinforcement rib 112A at other area. That is, as shown in FIG. 24, it is preferable that the protruding extent "m" of the reinforcement protrusion 108 be the largest in the junction area 120 of the carriage surface 2 and the support tube 7. For example, in the case of FIG. 23, with the junction point "D" as a reference point where the carriage surface 2 and the uprighted portion of the support tube 7 join together as flat-viewed from the side face 2B, a perpendicular line "S" coming down from the junction point "D" to the bottom face 2A substantially coincides with the apex "T" in the curve of the reinforcement protrusion 108 to thus form a bulged shape. That is, the vertical height of the latitudinal reinforcement rib 112A is made the largest in the circumference of the junction face 103 and where the support tube 7 and the carriage surface 2 join together and at the uprighted portion of the support tube 7 constituting a substantially right angle with respect to the carriage surface 2. Further, it is preferable that the protruding extent of the reinforcement protrusion 108 be larger at the junction point "D" than at the corner of the platform 102. Thus, the thickness of the platform 102 in the area where the stress is liable to be concentrated can be made large for effective reinforcement. It should be noted, however, that the apex "T" of the bulge does not necessarily have to coincide with the perpendicular line "S" but a sufficient effect of reinforcement can be obtained even if there exists some displacement.

Thus, when the latitudinal reinforcement rib 112A is provided with the reinforcement protrusion 108, the structure of the base-and-frame assembly 1 can be made stronger. This is because of the following factor. When the force of pressing the support tube 7 in a downward direction or the power of tilting the support tube 7 is applied, a bending stress acts on the carriage plate 9. In the latitudinal reinforcement rib 112A having the reinforcement protrusion 108, the base-and-frame assembly 1 is reinforced from the bottom face to increase the bending strength, and thus the deformation or damage of the base-and-frame assembly 1 is prevented. In particular, by providing the reinforcement protrusion 108 in the vicinity of the uprighted portion of the support tube 7, the connection portion where a stress is liable to be concentrated is effectively reinforced. Therefore, such structure can also increase resistance to a very large shock acting instantaneously on the support tube 7.

Further, in addition to the reinforcement from the bottom face 2A by the latitudinal reinforcement rib 112A having the reinforcement protrusion 108, it can be practical to also provide the reinforcement wall 8 or reinforcement base 34 (refer to FIG. 8) as described in the first to third embodiments. Thus, the junction area 120 of the carriage surface 2 and the support tube 7 can be so structured as to be reinforced sterically in three directions, i.e., from the downward, lateral and rearward directions, and thus the structural strength of the base-and-frame assembly 1 can be increased more effectively.

Further, the reinforcement protrusion 108 is preferably so shaped that the center portion is made higher and other portions toward the opposite ends are gradually made lower. This is because such reinforcement protrusion 108 can improve the bending strength and increase the resistance to shock. Further, in the reinforcement protrusion 108, as the protruding extent "H" from the carriage surface 2 to the bottom end of the reinforcement protrusion 108 is increased, the strength of the base-and-frame assembly 1 can be effectively increased. However, when the protruding extent "H" downwardly of the latitudinal reinforcement rib 112A having the reinforcement protrusion 108 is made too large, there arises a risk that, when the wheeled luggage 500 is used, contact of the reinforcement protrusion 108 with the caster 6 will hamper the caster 6 from its smooth movement. In order to avoid such disadvantage, the height of the reinforcement protrusion 108 is limited for avoiding the contact with the caster 6.

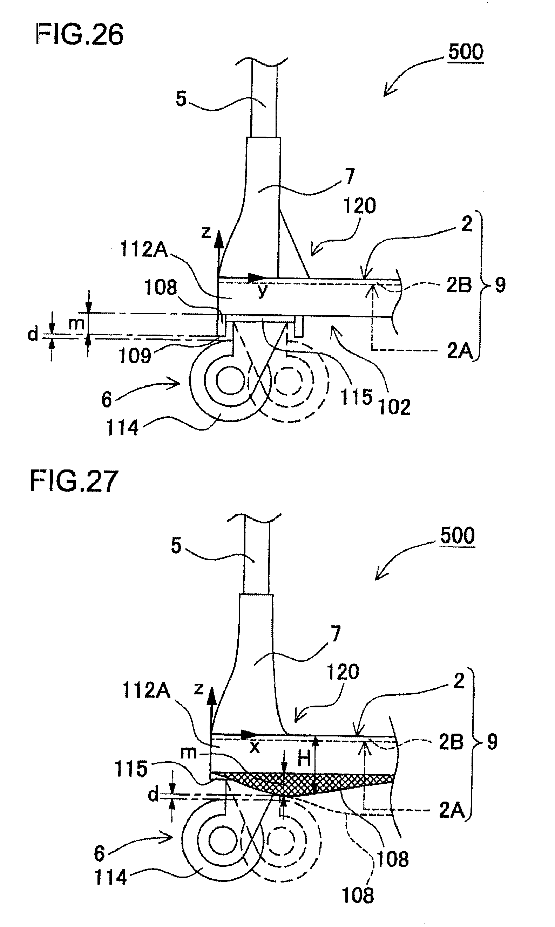

Specifically, FIG. 26 is a partial back view of the wheeled luggage 500 in accordance with the fourth embodiment, while FIG. 27 is a partial side view of the same. As shown in FIG. 26 and FIG. 27, a lower end of the reinforcement protrusion 108 is located above an upper end of the wheel 114 in a swiveling area of the swivel caster 6. More preferably, in the swiveling area of the caster 6, the protruding extent "m" of the reinforcement protrusion 108 is limited such that a gap "d" is defined between the bottom face 109 of the reinforcement protrusion 108 and the uppermost face of the wheel 114. Thus, even when the platform 102 sinks downwardly and accordingly the distance becomes narrower between the upper end of the wheel 114 and the lower end of the reinforcement protrusion 108 like when a load is applied in the gravity direction of the luggage, the contact can be avoided between the reinforcement protrusion 108 and the caster 6. That is, a smooth swiveling motion of the caster 6 can be constantly maintained. It suffices that the gap "d" is optimally determined in accordance with the fixture portion of the caster 6, the swivel axis, the material of the yoke and its play, and such gap is set to be about 2 mm in a state where the luggage is kept self-standing without the separable bag being carried on. However, the gap "d" can be set to be 1 mm to 4 mm, and preferably 1 mm to 3 mm.

Further, the reinforcement protrusion, being not specifically limited if it is so shaped as not to contact the caster 6, can be of various kinds such as an arc, a rectangle such as an oblong, a trapezoid and a parallelogram, a semicircle and a convexity. Further, as indicated by a dashed line in FIG. 27, the reinforcement protrusion 108 can have a sufficiently large main area, protruding downwardly so as not to contact the ground, and can also be of a shape of cut-away area which may otherwise be contacted in the swiveling motion of the swivel caster 6. According to the fourth embodiment, as shown in FIG. 27, in the latitudinal direction (X-axis direction) of the reinforcement protrusion 108, the protruding extent "m" of the reinforcement protrusion 108 is made large in the area below the junction area 120, while the overall protruding extent "H" downwardly of the latitudinal reinforcement rib 112A having the reinforcement protrusion 108 is made large. Further, the protruding extent "m" is made smaller toward the opposite ends of the reinforcement protrusion 108 to thus make the reinforcement protrusion 108 arcuate. And, in the corner of the platform 102 provided with the support tube 7, the protruding extent "m" downwardly of the reinforcement protrusion 108 is made smaller, with the corner being so structured that the wheel 114 of the caster 6 may swivel, straddling the bottom face 109 of the reinforcement protrusion 108. That is, in the point of mounting the caster 6, the latitudinal reinforcement rib 112A having the reinforcement protrusion 108 does not contact the caster 6, which does not hamper the motion of the caster 6. That is, when the reinforcement protrusion 108 is designed to be of a peculiar shape where the protruding extent "H" of the latitudinal reinforcement rib 112A at the junction area 120 is larger than the protruding extent "H" of the latitudinal reinforcement rib 112A in the corner of the platform 102 to which the caster 6 is connected, the free motion of the caster 6 can be maintained, with a sufficient area being gained for reinforcement.

Further, the number of the latitudinal reinforcement rib 112A to be disposed may be single, but a plurality of ribs is preferred in terms of strength. As shown in FIG. 24 and FIG. 25, in addition to the latitudinal reinforcement rib 112A provided around the carriage plate 9, other latitudinal reinforcement rib 112B may be provided inside the carriage plate 9. Such inner latitudinal reinforcement rib 112B is disposed closer to the center portion of the bottom face 2A so as to be parallel to the outer latitudinal reinforcement rib 112A provided in the circumference. Further, like the outer rib 112A, the inner rib 112B is preferably located below the portion of connecting the carriage plate 9 and the support tube 7. In the illustrated example, the outer rib 112A and the inner rib 112B are disposed at the bottom face so as to run along the edge of the portion of connecting the carriage plate 9 and the support tube 7. And, the outer rib 112A and the inner rib 112B are disposed substantially in a parallel relationship with respect to each other so as to put the caster 6 between them, the caster 6 being mounted to the corner of the carriage surface 2. When the outer rib 112A and the inner rib 112B are disposed on the bottom face 2A located below the support tube 7, the portion of connecting the carriage plate 9 and the support tube 7 can be sturdily reinforced from the bottom face side. In particular, the bending strength of the carriage plate 9 with respect to the tilting motion of the support tube 7 in the horizontal direction can be effectively improved. Further, the outer rib 112A and the inner rib 112B may be either of the same shape or of different shapes. In the illustrated example, the outer rib 112A and the inner rib 112B are of the same shape. When these latitudinal reinforcement ribs 112A, 112B are of the same shape, their formation can be done easily and the manufacturing process can be simplified. Alternatively, with a plurality of the latitudinal reinforcement ribs 112A, 112B being of the different shapes, for example in the case of the latitudinal reinforcement rib disposed in an area not hampering the swiveling motion of the caster 6, its contour can be made as large as possible, changing the size and the shape in accordance with the point of placement. Alternatively, the contour of the latitudinal reinforcement rib may be made smaller to reduce a total weight of the luggage.

Further, the illustrated inner rib 112B is composed of a single member. Like the outer rib 112A, the inner rib 112B can also be so shaped as to have the reinforcement protrusion 108 having a downwardly protruding shape with respect to the member constituting the platform 102. For example, a configuration may be employed in which the reinforcement protrusion 108 is integrally formed with the reinforcement rib 10 which is already disposed. In the illustrated inner rib 112B, for convenience' sake, the area (the cross-hatched portion) protruding more downwardly than the wall of the reinforcement rib 10 (in the direction of coming closer to the ground) is referred to as the reinforcement protrusion 108

Further, provided on the bottom face 2A of the carriage plate 9 are the reinforcement ribs 10 in a mutually intersecting manner. As shown in FIG. 24 and FIG. 25, the platform 102 has, in its four corners of the bottom face 2A, the reinforcement ribs 110 at the corners surrounded circumferentially by the orthogonal reinforcement ribs 10 and the longitudinal reinforcement rib 122. And, as shown in FIG. 24, the support tube 7 is provided on the carriage surface 2 of the carriage plate 9, being opposite to the bottom face 2A surrounded by the reinforcement ribs 110 at the corner. Further as shown in FIG. 25, the caster 6 is fixed to the segment which is segmented by the reinforcement ribs 110 at the corner. That is, the caster 6 and the support tube 7, being in the segment which is segmented by the reinforcement ribs 110 at the corner, is disposed via the carriage plate 9 upwardly and downwardly. Further, two rows of latitudinal reinforcement ribs 112A, 112B having the reinforcement protrusion 108 are disposed in contact with the side face of the reinforcement rib 110 at the corner, and thus the connection can be made sturdy between the reinforcement rib 110 and the bottom face 2A at the corner. As the result, the support tube 7 and the carriage plate 9 can be effectively reinforced from the bottom face side.

Further, the platform 102 is provided with two rows of mutually parallel latitudinal reinforcement ribs at the connection portion of the support tube 7, that is, the outer rib 112A and the inner rib 112B. Provided between the two rows of latitudinal reinforcement ribs 112A, 112B and on the bottom face of the carriage plate 9 are two rows of bottom reinforcement ribs 208 which are respectively integrally formed so as to protrude downwardly. The platform shown in FIG. 24 and FIG. 25 is provided with two rows of bottom reinforcement ribs 208, but the bottom reinforcement rib 208 can be either in a single row or in three or more rows. Further, the platform of the base-and-frame assembly shown in FIG. 25 is provided with a connection rib 110A between the two rows and the latitudinal reinforcement ribs 112A, 112B and below the support tube 7, and the bottom ribs 208 are connected to the connection rib 110A. The platform is provided with two rows of latitudinal reinforcement ribs 112A, 112B, the connection rib 110A and the bottom ribs 208 which are all integrally formed by using plastic.

Specifically, the connection rib 110A is a part of reinforcement rib 110 at the corner, and is integrally formed with the bottom face 2A along the edge of the portion of connecting the support tube 7 and the carriage plate 9. The opposite ends of the connection rib 110A are substantially orthogonally connected with the two rows of the latitudinal reinforcement ribs 112A, 112B, that is, the connection rib 110A is disposed in a parallel relationship with the longitudinal direction of the carriage plate 9. The bottom rib 208 has its one end connected to the connection rib 110A, and is integrally formed with the carriage plate 9 and the connection rib 110A. Further, the illustrated platform 102 is provided with two rows of the bottom ribs 208 at equal intervals. Further, the bottom rib 208 is disposed in a parallel posture with respect to the latitudinal reinforcement ribs 112A, 112B. The length of the bottom rib 208 is not specifically limited, but is about 4 cm. However, the length of the bottom rib 208 is preferably 3 cm to 5 cm, so that the ease of manufacture, the strength and the light weight are well balanced. The bottom rib 208 shown in FIG. 24 and FIG. 25 is provided such that its one end is connected to the connection rib 110A, but can also be so structured as to have a connection rib (not shown) provided at and connected to the opposite ends of the bottom rib 208. The number of the bottom rib 208 to be mounted may be either one or more, but a plurality of the ribs are preferred because the support tube 7 and the platform 102 can be made sturdily stable. By mounting the bottom rib 208, the resistance to shock and the bending strength can be improved in the latitudinal direction of the carriage surface 2. It is preferable because particularly by being disposed below the support tube 7, the stress which is liable to occur to the continued area between the support tube 7 and the carriage plate 9 can be mitigated so as to be able to bear a larger load. The illustrated bottom rib 208 is made lower than the latitudinal reinforcement ribs 112A, 112B and the width is made larger than that of the latitudinal reinforcements rib to improve the strength. However, the height of the bottom rib 208 can also be made substantially equal to the height of the latitudinal reinforcement ribs 112A, 112B. Further, the bottom rib 208 can be made high to improve the reinforcement effect, but the height can be set not to contact the caster to avoid the contact with the caster 6. Alternatively, like in the latitudinal reinforcement ribs 112A, 112B, the portion except for the area where the wheel of the caster 66 rotates can also be made high to obtain a shape of protruding outwardly and the vertical width can be made large to improve the reinforcement effect.

Thus, when the latitudinal reinforcement ribs 112A, 112B and the bottom rib 208 are provided, the junction area 120 can be reinforced from many directions, so that the strength of the base-and-frame assembly can be effectively increased. Specifically, in the structure that latitudinal reinforcement ribs 112A, 112B and the bottom rib 208 are disposed in a plurality of substantially parallel rows, the corner of the platform 102 which is the junction area 120 of the support tube 7 and the carriage surface 2 can be made sturdy by intensifying the structure. In addition, in the structure that the plurality of rows of the latitudinal reinforcement ribs 112A, 112B and the bottom rib 208 are disposed in a spaced-apart manner, the base-and-frame assembly can be reinforced as well as the entire base-and-frame assembly can be made lighter in weight. The thickness of the latitudinal reinforcement rib 112A, 112B is 3 mm. However, the thickness can be set to be 2 mm to 4 mm. Further, the thickness of the bottom rib 208 is about 5 mm, but the thickness can be set to be 3 mm to 10 mm. When the latitudinal reinforcement ribs 112A, 112B and the bottom rib 208 are too thin, the strength is liable to be decreased, and when they are too thick, the cost of the members and the total weight of the base-and-frame assembly are liable to be increased.

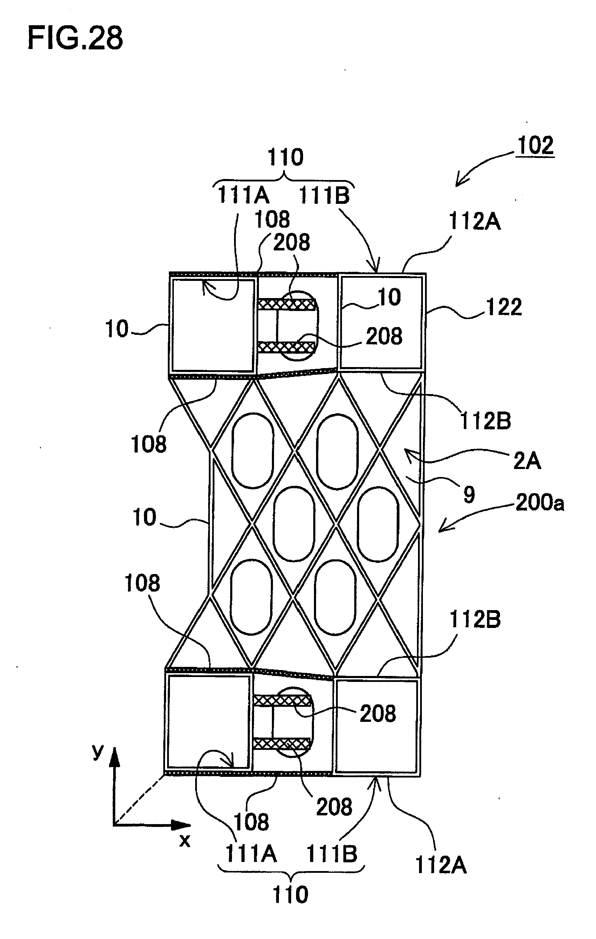

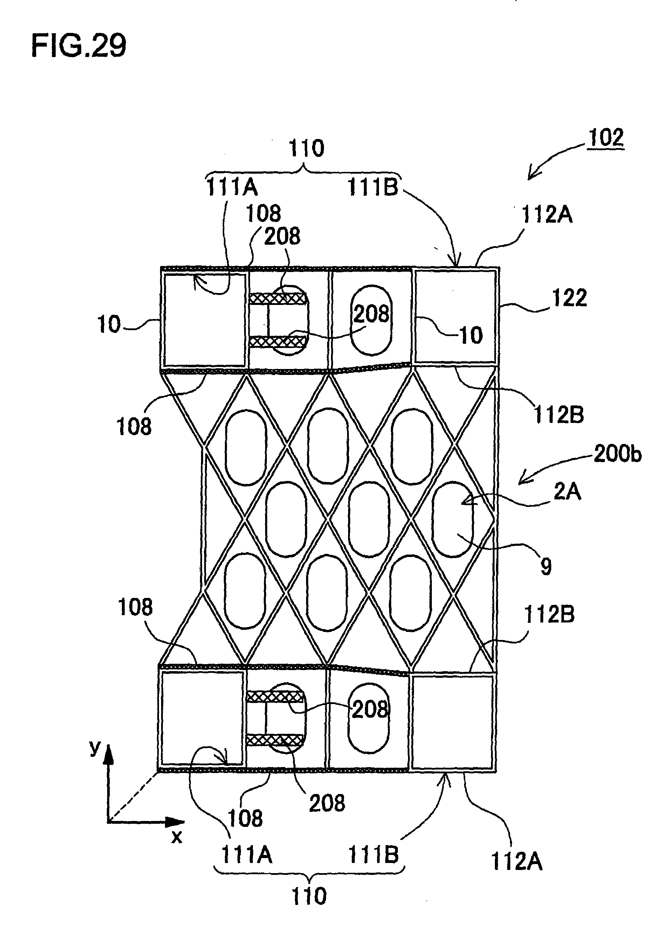

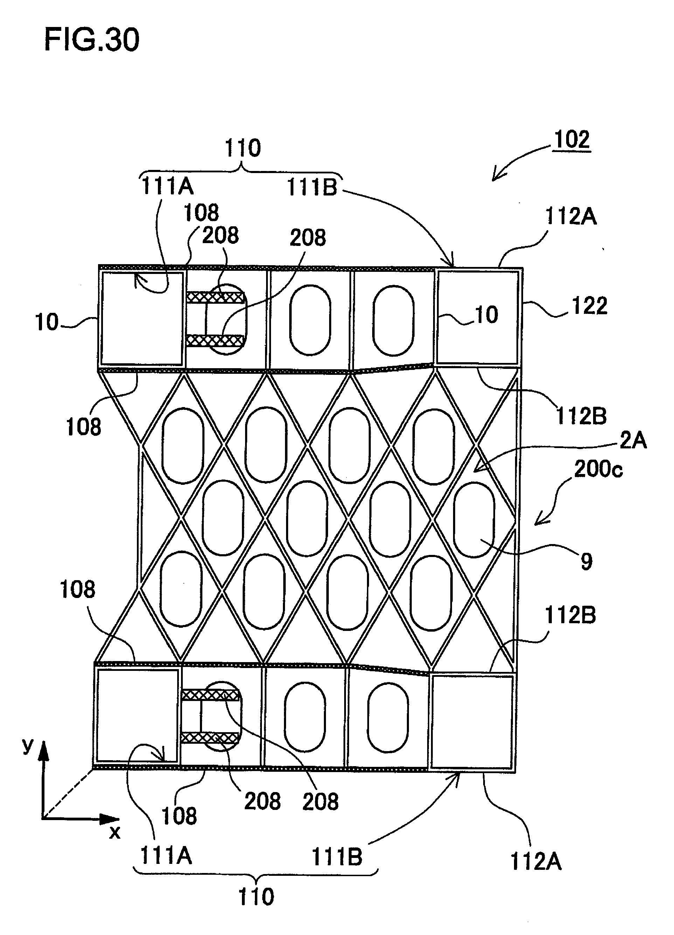

Incidentally, in the luggage 500, the rectangular carriage plate 9 can be of various sizes. For example, FIG. 28, FIG. 29 and FIG. 30 are bottom views of the platforms 102 respectively showing various sizes of carriage plates 200a, 200b and 200c. Further, in the bottom views, the reinforcement protrusions 108 of the outer rib 112A and the inner rib 112B and the bottom ribs 208 are clearly indicated by being cross-hatched. Also in the case of FIG. 28 through FIG. 30, three sizes of carriage surfaces are indicated, and these three kinds are equal in the side length of the longitudinal direction (direction of Y-axis) and differ only in the side length of the latitudinal direction (direction of X-axis). That is, in FIG. 28, the side in the latitudinal direction is short, while the sides in FIG. 29 and FIG. 30 become gradually longer. Specifically, side lengths to be shown in terms of longitudinal direction by latitudinal direction are 261 mm x 150 mm in FIG. 28, 261 mm x 180 mm in FIG. 29, and 261 mm x 210 mm in FIG. 30. However, the shape of the carriage surface is not limited to the above dimensions, and of course, a width larger or smaller than the above-mentioned dimensions is available to allow various kinds of separable bags to be detachably carried on.

Further, as shown in FIG. 28 through FIG. 30, the platform 102 has the reinforcement rib 110 at the corner, with the reinforcement rib being formed into the shape of a square, located at the opposite ends of the short side of the bottom face 2A and in the corner of the carriage plate 9. The reinforcement rib 110 at the corner has the reinforcement rib 111A at the rearward corner provided with the square-shaped reinforcement rib 10 at one end of the short side of the carriage plate 9 and along the edge of the area of connecting the carrier plate 9 and the support tube 7, and the reinforcement rib 111B at the forward corner provided at the other end of the short side. The reinforcement rib 111B at the forward corner is provided as the shape of a square composed of the latitudinal reinforcement ribs 112A, 112B in the latitudinal direction and the longitudinal reinforcement rib 122 and the reinforcement rib 10 in the longitudinal direction. The reinforcement rib 111A at the rearward corner can reinforce the connection of the carriage plate 9 and the support tube 7 from the bottom face side. Further, the outer rib 112A and the inner rib 112B are disposed substantially in a parallel relationship putting the outer face of the reinforcement rib 111A at the rearward corner. When the reinforcement rib 111A at the rearward corner is disposed between the two parallel rows of latitudinal reinforcement ribs 112A, 112B, the reinforcement rib 111A at the rearward corner is further reinforced, so that the connection area of the support tube 7 and the carriage plate 9 can further be reinforced on the bottom face side.

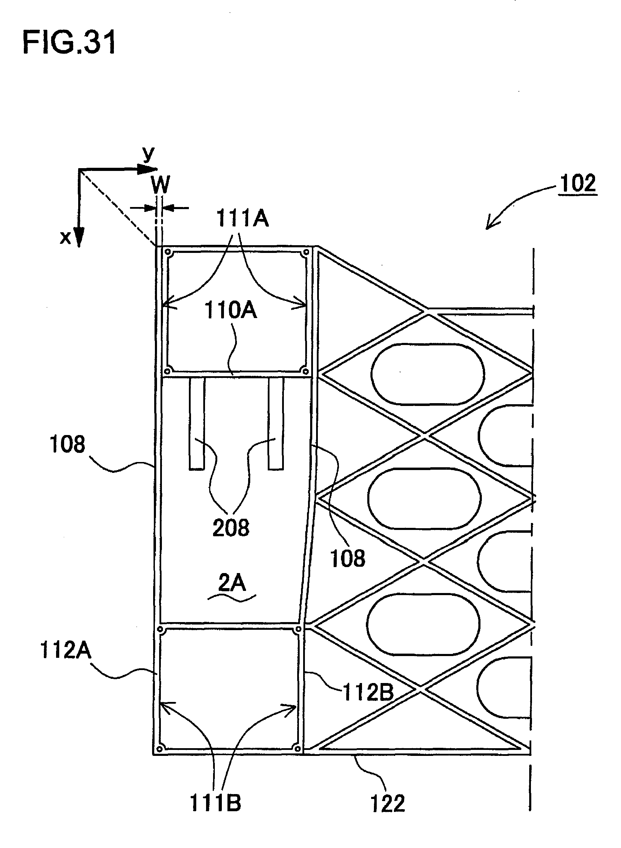

Further, FIG. 31 is a bottom view of the platform 102, showing a partially enlarged view of the bottom face 2A. It is preferable that the fixture position of the forward caster 6 be at the opposite ends of the long side of the bottom face 2A and that the casters be spaced apart from each other to the utmost extent. Thus, the luggage 500 can be kept stably self-standing without being tilted.

The outer reinforcement rib 112A, in its one end, covers the side face of the reinforcement rib 111A at the rearward corner, and the other side constitutes the reinforcement rib 111B at the forward corner. Therefore, the reinforcement rib 111A at the rearward corner is situated inside (right side as viewed in FIG. 31) by the thickness "w" of the latitudinal reinforcement rib 112A. The reinforcement rib 111A at the rearward corner situated at the corner of the platform 102 and the reinforcement rib 111B at the forward corner is misaligned in their disposed position in the longitudinal direction (Y-axis direction). The inner rib 112B is disposed in a tilted manner to correspond with the misalignment in the disposition of the reinforcement rib 111A at the rearward corner and the reinforcement rib 111B at the forward corner. As shown in FIG. 31, the inner rib 112B covers and contacts, in its one end, the side face of the reinforcement rib 111A at the rearward corner, and is tilted to the left side along the downward direction as shown in FIG. 31, while the other end constitutes one side of the reinforcement rib 111B at the forward corner and further is connected to the longitudinal reinforcement rib 122. Further, in the case of FIG. 31, the reinforcement rib 10 in the longitudinal direction is not provided between the reinforcement rib 111A at the rearward corner and the reinforcement rib 111B at the forward corner, with the total weight of the platform 102 being reduced.

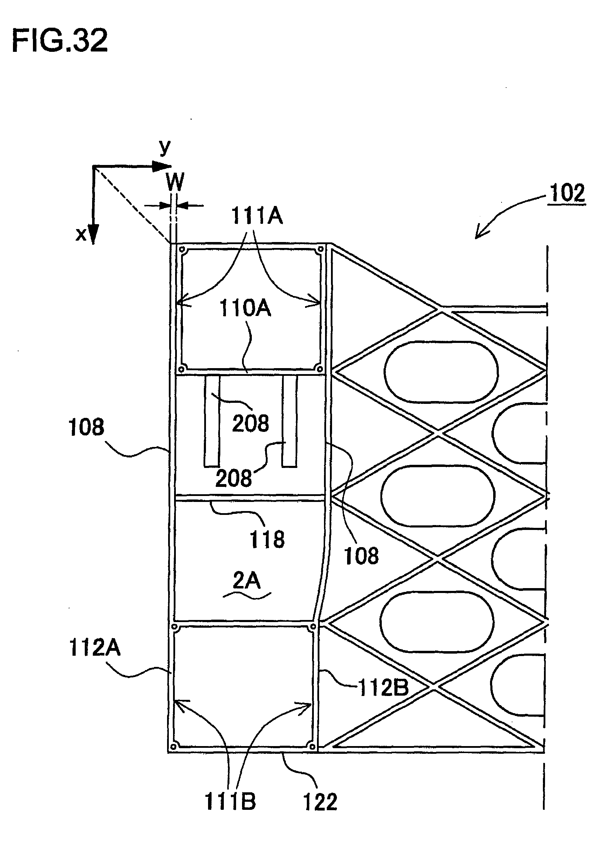

On the other hand, in addition to the structure of the platform 102 shown in FIG. 31, the platform 102 shown in FIG. 32 has a bridging rib 118 situated in a parallel relationship with the connection rib 110A. The bridging rib 118 is provided between the reinforcement rib 111A at the rearward corner and the reinforcement rib 111B at the forward corner, and is integrally formed with the bottom face 2A. Further, the bridging rib 118 is substantially orthogonal to the outer rib 112A and the inner rib 112B and bridges these latitudinal reinforcement ribs 112A, 112B. When the opposite ends of the bridging rib 118 are respectively connected to the outer rib 112A and the inner rib 112B, the connection strength can be increased between the latitudinal reinforcement ribs 112A, 112B and the bottom face 2A. The inner rib 112B may intersect the bridging rib 118. The inner rib 112B as shown in FIG. 32 allows its one end to contact the side face of the reinforcement rib 111A at the rearward corner, and is orthogonally connected to the bridging rib 118 in a straight line from the one end to the bridging rib 118. Further, the inner rib 112B is curved to the left side along from the connection area with the bridging rib 118 to the other end, constitutes one side of the reinforcement rib 111B at the forward corner, and then is connected further to the latitudinal rib 122,

Further, as each member constituting the platform 102, the members such as the carriage plate 9, the reinforcement rib 10, the reinforcement protrusion 108, the latitudinal reinforcement ribs 112A, 112B, the bottom rib 208 and the bridging rib 118 respectively may be mutually connected as separate members. Alternatively, at least two or more members are integrally formed by using plastic to increase the strength. It should be noted, however, that an integral formation using light metal such as aluminum in lieu of plastic can also increase the strength.

Further, a method of connecting the caster to be fixed to the reinforcement rib 110 at the corner is not specifically limited. In the case of FIG. 25, the reinforcement rib 110 at the corner is defined with a concavity opening at one side, with the bottom face 2A being the lowest face. And, connection of the caster is established so as to close the concavity by means of a planar caster base 115 (refer to FIG. 26). Specifically, as shown in FIG. 25, the reinforcement rib 110 at the corner has, respectively at its four corners, a boss 113. And, the caster base 115 is a plate of substantially the same shape as the rectangle of the reinforcement rib 110 at the corner, and is defined with a through-hole at a position substantially overlapping the disposed position of the boss 113 when covering the concavity of the reinforcement rib 110 at the corner. In a state that the caster base 115 covers the top face of the reinforcement rib 110 at the corner, a fastening member such as a screw is fitted via the through-hole to the boss 113 to fix the caster base 115 to the platform 102. Further, by connecting the caster 6 to the caster base 115 or by having connected the caster 6 to the caster base 115 beforehand, the caster 6 can be connected via the caster base 115 to the bottom face 2A of the platform 102.

Thus, in the structure of providing the reinforcement protrusion, the latitudinal reinforcement rib provided with the reinforcement protrusion, or the reinforcement members such as the bottom rib and the bridging rib, on the bottom side of the carriage plate 9 and along the side face 2B, or so as to fill the gap of the originally provided reinforcement rib structure, the strength of the platform 102 can be increased without limiting the position of disposing the member situated above the carriage surface 2, such as the carriage space of the separable bag and the support tube. Further, on the platform 9, the reinforcement wall or the reinforcement base is provided on the long side to which the support tube 7 is fixed. Further, the platform 102 can be reinforced by gathering, to one side of the carriage plate 9, the members which are fixed on the top of the platform 9, such as the support tube 7, the reinforcement wall and the reinforcement base, without providing an obstacle to other sides of the carriage surface 2 to widely secure the carriage area for the separable bag 3. Thus, in the structure of providing intensive reinforcement on or under the carriage plate 9 and further around the support tube 7, the wheeled luggage can be kept stably self-standing. Further, since the extendable rod can be disposed on the opposite ends of the carriage surface 2, the spaced-apart distance of the extendable rods can be sufficiently obtained to elongate the gripping area. Thus, the grip can be made easy to hold, allowing a direction of moving the luggage to be controlled with ease.

### Industrial Applicability

The wheeled luggage and the base-and-frame assembly constituting the wheeled luggage of the present invention can be advantageously used for a bag, a transportation vehicle such as a cart, a walker, etc.
It should be apparent to those with an ordinary skill in the art that while various preferred embodiments of the invention have been shown and described, it is contemplated that the invention is not limited to the particular embodiments disclosed, which are deemed to be merely illustrative of the inventive concepts and should not be interpreted as limiting the scope of the invention, and which are suitable for all modifications and changes falling within the scope of the invention as defined in the appended claims. The present application is based on Applications No. 2008-016,419 filed in Japan on January 28, 2008, and No. 2008-262,968, filed in Japan on October 9, 2008, the contents of which are incorporated herein by references.

## Claims

1. Wheeled luggage comprising:
a separable bag (3);
a base-and-frame assembly (1) for carrying the separable bag (3) thereon,
wherein the base-and-frame assembly (1) includes:
a platform (102) having, on a top face thereof, a carriage surface (2) for detachably carrying the separable bag (3) thereon;
swivel casters (6) fixed to a bottom face opposite to the carriage surface (2) of the platform (102) and allowing the base-and-frame assembly (1) to travel in free directions;
a hollow support tube (7) connected to one side of the carriage surface (2) of the platform (102) in a self-standing manner and protruding substantially vertically in an upward direction;
an extendable rod (5) connected to the support tube (7) in a self-standing manner, the rod (5) being freely extendable and having a grip (4) provided on one end of the support tube (7); and
a stopper (15) for stopping the extendable rod (5) at an extended position,
wherein the base-and-frame assembly (1) has two support tubes (7) on one side of the carriage surface (2), two extendable rods (5) respectively connected to the two support tubes (7), and the grip (4) connected on top ends of the two extendable rods (5);
the platform (102) has a planar carriage plate (9) with a top face thereof serving as the carriage surface; and
the platform (102) has the support tube (7) connected in a manner of extending substantially upwardly from one side of the carriage plate (9),
**characterized in that**
the platform (102) is provided, in a horizontal plane including the carriage surface (2), with a latitudinal reinforcement rib (112A) extending laterally in a direction orthogonal to the grip (4) and protruding on a bottom face of the carriage plate (9), the latitudinal reinforcement rib (112A) being integrally formed with the carriage plate (9), and
the latitudinal reinforcement rib (112A) has a reinforcement protrusion (108) positioned below the support tube (7) and protruding downwardly, the reinforcement protrusion (108) being integrally formed with the latitudinal reinforcement rib (112A).

2. The wheeled luggage as recited in claim 1 or the base-and-frame assembly as recited in claim 23, **characterized in that** the extendable rod (5), in a posture with the grip (4) being lifted, is curved in a direction of being made eccentric toward a center portion from the one side of the carriage surface (2).

3. The wheeled luggage as recited in claim 1 or claim 2 or the base-and-frame assembly as recited in claim 23, **characterized in that** the extendable rod (5), in a posture with the grip (4) being lifted, is slanted toward the center portion from the one side of the carriage surface (2).

4. The wheeled luggage as recited in any one of claim 1 through claim 3 or the base-and-frame assembly as recited in claim 23, **characterized in that** the support tube (7) is connected to the carriage plate (9) so as to extend substantially upwardly from opposite ends of the one side of the carriage plate (9).

5. The wheeled luggage or the base-and-frame assembly as recited in claim 4, **characterized in that** the carriage plate (9) has two rows of latitudinal reinforcement ribs (112A, 112B) in a circumference and on an inside thereof, the latitudinal reinforcement ribs (112A, 112B) being disposed below a connecting area of the support tube (7) and the carriage plate (9), each of the latitudinal reinforcement ribs (112A, 112B) forming a reinforcement protrusion (108), the reinforcement protrusions (108) being aligned substantially in parallel.

6. The wheeled luggage as recited in claim 5, **characterized in that** the platform (102) has one or more rows of bottom reinforcement ribs (208) integrally formed between the two rows of latitudinal reinforcement ribs (112A, 112B) in a manner of protruding downwardly on the bottom face of the carriage plate (9).

7. The wheeled luggage or the base-and-frame assembly as recited in claim 5 or 6, **characterized in that**, the two rows of latitudinal reinforcement ribs (112A, 112B) comprises: an inner latitudinal reinforcement rib (112B) provided inside of the carriage plate (9); and an outer latitudinal reinforcement rib (112A) provide in the circumference of the carriage plate (9).

8. The wheeled luggage or the base-and-frame assembly as recited in any one of claim 5 through claim 7, **characterized in that** the latitudinal reinforcement rib (112A, 112B) is provided with the reinforcement protrusion (108) formed in a shape of enlarging a protruding extent downwardly of the latitudinal reinforcement rib (112A) in an area adjacent to a portion where the support tube (7) uprights from the carriage surface (2).

9. The wheeled luggage or the base-and-frame assembly as recited in any one of claim 5 through claim 7, **characterized in that** the reinforcement protrusion (108) is provided below the portion of connecting the carriage surface (2) and the support tube (7), and a protruding extent is the largest below the junction point (D) in the circumference of the junction face (103) of the support tube (7) and the carriage surface (2) and where the carriage surface (2) and the uprighted portion of the support tube (7) join together substantially at a right angle as flat-viewed from the side face (2B).

10. The wheeled luggage as recited in any one of claim 5 through claim 9 or the base-and-frame assembly as recited in any one of claims 5 through claim 10, **characterized in that** a lower end of the reinforcement protrusion (108) is located above an upper end of a wheel (114) in a swiveling area of the swivel caster (6).

11. The base-and-frame assembly as recited in claim 5, **characterized in that** the platform (102) has one or more rows of bottom reinforcement ribs (208) between the two rows of latitudinal reinforcement ribs (112A, 112B), the one or more rows of bottom reinforcement ribs (208) integrally formed so as to protrude downwardly of the bottom face of the carriage plate (9).

12. The wheeled luggage as recited in any one of claim 1 through claim 11, **characterized in that** a reinforcement wall (8) connecting the support tube (7) and the carriage surface (2) is provided at the uprighted portion of the support tube (7) protruding from the carriage surface (2), and the reinforcement wall (8) is in a plane parallel to the grip and is disposed at a side edge of the carriage surface (2).

13. The wheeled luggage as recited in claim 12, **characterized in that** the reinforcement wall (8) is disposed between the two pieces of support tubes (7).

14. The wheeled luggage as recited in claim 12 or 13, **characterized in that** the support tube (7) has a reinforcement base (34) protruding in a thickness direction of the reinforcement wall (8).

15. The wheeled luggage as recited in any one of claim 1 through claim 14, **characterized in that** the caster (6) is located substantially in a perpendicular direction from the support tube (7).

16. The wheeled luggage as recited in any one of claim 1 through claim 15, **characterized in that** the support tube (7) is provided at a corner of the carriage surface (2).

17. The wheeled luggage as recited in any one of claim 1 through claim 16, **characterized in that**
the separable bag (3) has an insertion belt (40) opening in an extendable direction of the extendable rod (5) and allowing the extendable rod (5) to be inserted through, and
the separable bag (3) is so structured as to be detachably mounted to the base-and-frame assembly (1) by inserting the extendable rod (5) through the insertion belt (40).

18. The wheeled luggage as recited in any one of claim 1 through claim 17, **characterized in that** a height from a bottom face of the caster (6) to the grip (4) is 60-100 cm in a state that the extendable rod (5) is extended and the stopper (15) allows the extendable rod (5) to stop.

19. The wheeled luggage as recited in any one of claim 1 through claim 18, **characterized in that** the extendable rod (5) comprises a guide tube (5B) fixed to the carriage surface (2) in a vertically facing posture and an extraction rod (5A) inserted in the guide tube (5B) in an extendable and retractable manner, and the grip (4) is fixed to a top end of the extraction rod (5A).

20. The wheeled luggage as recited in claim 19, **characterized in that** two pieces of the guide tube (5B) are connected, at a top end thereof, to a connection rod (11).

21. The wheeled luggage as recited in claim 20, **characterized in that** the connection rod (11) has a connection piece (13) protruding upwardly at a face opposite to the separable bag (3), the separable bag (3) is provided with an insertion portion (3B) allowing the connection piece (13) to be inserted for connection to the connection rod (11), the connection piece (13) is inserted into the insertion portion (3B), and the separable bag (3) is connected to the connection rod (11).

22. The wheeled luggage as recited in any one of claim 1 through claim 21, **characterized in that** the extendable rod (5) has the connection piece (13) protruding upwardly at a face opposite to the separable bag (3), the separable bag (3) is provided with an insertion portion (3B) allowing the connection piece (13) to be inserted for connection to the extendable rod (5), the connection piece (13) is inserted into the insertion portion (3B), and the separable bag (3) is connected to the extendable rod (5).

23. A base-and-frame assembly which can carry a separable bag (3), the assembly comprising:
a platform (102) having, on a top face thereof, a carriage surface (2) allowing the separable bag (3) to be detachably carried on;
a swivel caster (6) fixed to a bottom face opposite to the carriage surface (2) of the platform (102) and allowing the base-and-frame assembly (1) to travel in free directions;
a hollow support tube (7) connected to one side of the carriage surface (2) of the platform (102) in a self-standing manner and protruding substantially perpendicularly in an upward direction;
an extendable rod (5) connected to the support tube (7) in a self-standing manner, being freely extendable, and being provided with a grip (4) at one end; and
a stopper (15) allowing the extendable rod (5) at an extended position,
**characterized in that**
the base-and-frame assembly (1) is provided with two pieces of support tubes (7) at one side of the carriage surface (2), two pieces of extendable rods (5) are connected to the two pieces of support tubes (7), and the grip (4) is connected to top ends of the two pieces of extendable rod (5);
the platform (102) has a planar carriage plate (9) with a top face thereof serving as the carriage surface;
the support tube (7) is connected so as to extend substantially upwardly from one side of the carriage plate (9);
the platform (102) is provided, in a horizontal plane including the carriage surface, with a latitudinal reinforcement rib (112A) integrally formed with the carriage plate (9), the latitudinal reinforcement rib (112A) extending in a lateral direction orthogonal to the grip and protruding on a bottom face of the carriage plate (9); and
the latitudinal reinforcement rib (112A) is provided with a reinforcement protrusion (108) protruding downwardly at an area situated below the support tube (7), the reinforcement protrusion (108) being integrally formed with the latitudinal reinforcement rib (112A).
